# EUROPEAN PATENT APPLICATION

(11) **EP 4 737 156 A1**
(43) Date of publication of application: **06.05.2026**
(21) Application number: 24829860.6
(22) Date of filing: 22.02.2024
(51) Int. Cl.: B60K 1/04

(54) **BATTERY MOUNTING FRAME, VEHICLE FRAME ASSEMBLY AND VEHICLE**

(30) Priority: 30.06.2023 CN 202310799478
(71) Applicant: Contemporary Amperex Technology Co., Limited, Ningde, Fujian 352100 (CN)
(72) Inventor: WU, Kai, Ningde, Fujian 352100 (CN); CAO, Gen, Ningde, Fujian 352100 (CN); LI, Shuo, Ningde, Fujian 352100 (CN); ZHANG, Shuai, Ningde, Fujian 352100 (CN); CHAN, Libing, Ningde, Fujian 352100 (CN)
(74) Representative: Gong, Jinping
(86) International application number: PCT/CN2024/078162
(87) International publication number: WO 2025/001202

(57) **Abstract**

A battery installation frame is disclosed. The battery installation frame includes a frame body (10a), a mounting structure (3), and a docking structure (6), where the frame body (10a) is configured to be installed to a vehicle body (101), the mounting structure (3) is integrated on the frame body (10a) and configured to mount a battery (30), and the docking structure (6) is also integrated on the frame body (10a) and configured to connect the vehicle body (101) and dock with the battery (30), so as to enable the battery (30) to form electrical and/or fluidic communication with the vehicle body (101). A frame assembly and a vehicle are further disclosed.

## Description

### CROSS-REFERENCE TO RELATED APPLICATIONS

This application is based on and claims the priority to Chinese Patent Application No. 202310799478.4, filed on June 30, 2023, which is incorporated herein by reference in its entirety.

### TECHNICAL FIELD

This application relates to the field of batteries, and specifically, to a battery installation frame, a frame assembly, and a vehicle.

### BACKGROUND

Energy conservation and emission reduction are key to the sustainable development of the automotive industry. Electric vehicles, due to their energy-saving and environmentally friendly advantages, have become an important part of the sustainable development of the automotive industry. For electric vehicles, battery technology stands as a pivotal factor influencing their advancement. During battery swapping operations for vehicles, not only is disassembly, replacement, and assembly of the battery required, but also the connection of electrical wires and pipelines between the battery and the vehicle, resulting in low swapping efficiency.

### SUMMARY

In view of the above issues, this application provides a battery installation frame, a frame assembly, and a vehicle, which can improve the battery swapping efficiency and battery swapping success rate.

According to a first aspect, this application provides a battery installation frame, including a frame body, a docking structure, and a mounting structure, where the frame body is configured to be installed to a vehicle body, the mounting structure is integrated on the frame body and configured to mount a battery, and the docking structure is also integrated on the frame body and configured to connect the vehicle body and dock with the battery, so as to enable the battery to form electrical and/or fluidic communication with the vehicle body.

In the technical solution of the embodiments of this application, by integrating both the mounting structure and the docking structure on the frame body, when such a battery installation frame is used to install the battery to the vehicle body, the battery can be mounted and installed via the mounting structure integrated on the frame body, and the electrical and/or fluidic communication between the battery and the vehicle body can be achieved via the docking structure integrated on the frame body, thereby eliminating the need to connect electrical wires and pipelines, simplifying the complex battery swapping operation, and improving swapping efficiency. Moreover, since both the mounting structure and the docking structure are integrated on the frame body, a reference datum for the mounting position of the battery and a reference datum for the electrical/fluid docking position are consistent, that is, the frame body, thereby improving the battery swapping success rate.

In some embodiments, the frame body includes a main body portion and an extension portion, where the main body portion is configured to be installed to the vehicle body, the docking structure is disposed on the main body portion, one end of the extension portion is connected to the main body portion, another end extends in a direction away from the main body portion, and the mounting structure is disposed on the extension portion.

In the above technical solution, since the frame body includes the main body portion and the extension portion, with one end of the extension portion connected to the main body portion and the another end extending in the direction away from the main body portion, the docking structure and the mounting structure are respectively disposed on the main body portion and the extension portion, in other words, the docking structure and the mounting structure are disposed at different positions of the frame body, thereby avoiding mutual interference between the mounting structure and the docking structure, which helps to reduce the difficulty of coordinating the docking structure and the mounting structure with the battery 30.

In some embodiments, the main body portion includes a beam avoidance groove, the beam avoidance groove has an opening running through along a first direction, and the docking structure is located within the beam avoidance groove.

In the above technical solution, by providing the beam avoidance groove on the main body portion, when the main body portion is connected to the vehicle body, at least a portion of the vehicle beam can extend into the beam avoidance groove, making the connection between the main body portion and the vehicle body more compact. Additionally, by disposing the docking structure within the beam avoidance groove, the space within the beam avoidance groove can be fully utilized to improve space utilization and reduce the space occupied by the docking structure in other positions of the battery installation frame; the docking structure can be protected by the inner wall of the beam avoidance groove, thereby reducing the probability of the docking structure being damaged by collisions and alleviating the problem of corrosion failure of the docking structure caused by mud or water.

In some embodiments, the main body portion includes a plurality of first main walls spaced apart along the first direction, an avoidance opening is formed between two adjacent first main walls, and a docking interface of the docking structure is higher than the first main walls and is disposed corresponding to the avoidance opening.

In the above technical solution, since the docking interface of the docking structure is higher than the first main walls, the ground clearance of the docking interface of the docking structure is relatively large, providing better protection. Moreover, the height setting of the docking interface of the docking structure helps to save the space to increase the height dimension of the battery, improves the compactness of the coordination between the battery installation frame and the battery, makes full use of the space, and increasing the dimension and volumetric energy density the battery. Additionally, by providing the avoidance opening, when the battery is mounted on the battery installation frame, a portion of the battery can extend upward into the avoidance opening and dock with the docking interface of the docking structure, thereby meeting docking requirements.

In some embodiments, the docking structure includes a bearing frame and a docking apparatus, and the bearing frame includes a bearing portion and leg portions, where the docking apparatus is disposed on the bearing portion, and the leg portions extend from two ends of the bearing portion in the first direction toward the first main wall and are connected to the first main wall.

In the above technical solution, by disposing the docking apparatus on the bearing portion and having the leg portions extend from two ends of the bearing portion in the first direction toward the first main body portion and connect to the first main wall, the bearing portion can be spaced apart from the first main wall, allowing the bearing frame to be configured in a shape that can upwardly avoid the battery, and facilitating an increase in the setting height of the docking apparatus to save the space and increase the height dimension of the battery. Furthermore, when the first direction is the length direction of the vehicle, disposing the two leg portions on two sides of the bearing portion in the first direction can occupy only the space in the length direction of the vehicle, which is relatively ample, reducing the space occupied in the width direction of the vehicle, thereby facilitating an increase in the dimension and energy density of the battery in the width direction of the vehicle.

In some embodiments, the bearing portion has a first weight-reducing structure, and/or a first reinforcing structure is provided at a connection between the leg portion and the bearing portion.

In the above technical solution, providing the first weight-reducing structure on the bearing portion helps to reduce the weight of the bearing portion, thereby reducing the weight of the docking structure to achieve a lightweight design of the docking structure; and/or, providing the first reinforcing structure at the connection between the bearing portion and the leg portion helps to enhance the structural strength at the connection between the bearing portion and the leg portion, reducing the probability of fracture at the connection between the leg portion and the bearing portion.

In some embodiments, the bearing frame is an integrally formed piece and is assembled and connected to the first main wall.

In the above technical solution, configuring the bearing frame as an integrally formed piece helps to reduce the difficulty of setting up the bearing frame, and helps to ensure the overall structural strength of the bearing frame. Additionally, the assembly connection between the bearing frame and the first main wall helps to reduce the difficulty of assembling and disassembling the bearing frame and the first main wall, improving the production efficiency of the battery installation frame.

In some embodiments, the avoidance opening is provided in plurality, the plurality of avoidance openings are spaced apart along the first direction, and each of the avoidance openings is provided with the corresponding docking structure.

In the above technical solution, by providing a plurality of avoidance openings, when a plurality of batteries are mounted on the battery installation frame, the requirements for electrical and/or fluidic docking between the plurality of batteries and the vehicle body can be respectively achieved through a plurality of docking structures, to be specific, each battery can meet the electrical and/or fluidic communication requirements with the vehicle body through the docking of the corresponding docking structure, allowing the vehicle to achieve independent communication with individual batteries through the corresponding docking structures, facilitating independent power supply operation or individual control of each battery by the vehicle body.

In some embodiments, the main body portion includes two second main walls extending along the first direction, the two second main walls being spaced apart along a second direction intersecting the first direction, and the two second main walls being connected to two ends of each of the first main walls in the second direction to form the beam avoidance groove with an open top between the first main walls and the second main walls; and the extension portion is connected to the second main wall and located on a side of the second main wall away from the first main wall in the second direction.

In the above technical solution, by providing the second main walls, the plurality of first main walls and the second main walls can be connected as an integral structure, which helps to reduce the arrangement and forming difficulty of the main body portion and helps to define the extension direction of the beam avoidance groove, making the beam avoidance groove extend along the first direction. Additionally, since the beam avoidance groove has an open top, the main body portion can be pushed upward from bottom to top, allowing the vehicle beam to enter the beam avoidance groove, thereby facilitating the reduction of the assembly difficulty of the battery installation frame to the vehicle body. For a vehicle body that has already been assembled, the battery installation frame can be subsequently installed, making the battery installation frame applicable to various vehicle models. Moreover, connecting the extension portion to the side of the second main wall away from the first main wall in the second direction can increase the length occupied by the extension portion in the second direction while avoiding interference between the extension portion and the vehicle beam, thereby facilitating the expansion of the battery mounting space in the second direction. Additionally, it facilitates the connection between the extension portion and the main body portion.

In some embodiments, a plurality of the extension portions spaced apart along the first direction are provided on one side of the main body portion, and a battery mounting space is defined between two adjacent extension portions.

In the above technical solution, by providing a plurality of extension portions spaced apart along the first direction on one side of the main body portion with, and defining the battery mounting space between two adjacent extension portions along the first direction, the extension portions can play a role in protecting the battery. When the first direction is set as the length direction of the vehicle and the mounting structure is disposed on the extension portion, neither the mounting structure nor the extension portion occupies the space in the width direction of the vehicle, thereby increasing the dimension of the battery mounting space in the width direction of the vehicle, increasing the dimension of the battery in the width direction of the vehicle, and facilitating an increase in the volumetric energy density of the battery. Moreover, setting the first direction as the length direction of the vehicle, due to the relatively large longitudinal space of the vehicle, also helps to increase the dimension or quantity of battery mounting spaces in the length direction of the vehicle, further increasing the volumetric energy density or quantity of the battery.

In some embodiments, a plurality of battery mounting spaces spaced apart along the first direction are provided on one side of the main body portion, the docking structure is provided in plurality, the plurality of docking structures are spaced apart along the first direction, and the plurality of docking structures are arranged opposite the plurality of battery mounting spaces along a second direction intersecting the first direction.

In the above technical solution, by providing a plurality of battery mounting spaces spaced apart along the first direction on one side of the main body portion with, the battery installation frame can have the function of mounting a plurality of batteries in the first direction, that is, achieving a multi-pack mounting function, facilitating flexible battery swapping. Moreover, the docking structure is arranged opposite the battery mounting space along the second direction, and the distribution direction of the docking structures does not occupy the space of the battery mounting spaces in the first direction, to be specific, the docking structures, while achieving docking with the battery, do not occupy the space in the arrangement direction of the plurality of battery mounting spaces, facilitating an increase in the quantity or dimension of battery mounting spaces arranged along the first direction, improving space utilization, and enabling the battery installation frame to mount a greater quantity or larger batteries.

In some embodiments, the mounting structure is arranged on a side of the extension portion facing the battery mounting space.

In the above technical solution, by arranging the mounting structure on the side of the extension portion facing the battery mounting space, the mounting structure corresponds to the battery mounting space it faces and is configured to mount the battery in the battery mounting space that the mounting structure faces, thereby clearly defining the correspondence between the mounting structure and the battery mounting space. When the battery is inserted into the battery mounting space, it can be connected to the mounting structure facing the battery mounting space, facilitating the mounting of the battery. Moreover, when there are a plurality of battery mounting spaces, the mounting structures corresponding to different battery mounting spaces are positioned differently and do not interfere with each other. This allows the mounting structure corresponding to each battery mounting space to have ample space for flexible configuration, enabling the mounting structure to more easily and reliably mount the battery.

In some embodiments, at least one extension portion located in the middle among the plurality of extension portions arranged along the first direction is a shared extension portion, the shared extension portion has the battery mounting space on each of two sides in the first direction, and the mounting structures are respectively arranged on the two sides of the shared extension portion facing the battery mounting spaces on the two sides in the first direction.

In the above technical solution, when the quantity of battery mounting spaces spaced apart along the first direction is fixed, the quantity of extension portions spaced apart along the first direction can be reduced, facilitating cost reduction and reducing the load of the vehicle. Additionally, since the mounting structures are respectively arranged on the two sides of the shared extension portion facing the battery mounting spaces on the two sides in the first direction, batteries in two adjacent battery mounting spaces in the first direction can be respectively mounted to the mounting structures on the two sides of the shared extension portion, making the battery mounting more compact and facilitating the reduction of the arrangement difficulty of the mounting structures.

In some embodiments, the mounting structures on the two sides of the shared extension portion have staggered orthographic projections on a projection plane perpendicular to the first direction.

In the above technical solution, the mounting structures on two sides of the shared extension portion are configured to have staggered orthographic projections on the projection plane perpendicular to the first direction, which facilitates more reasonable stress distribution on the shared extension portion. When batteries in the battery mounting spaces on the two sides of the shared extension portion are respectively connected to the mounting structures on the two sides of the shared extension portion, problems such as deformation or fracture of the shared extension portion caused by stress concentration can be alleviated, the service life of the shared extension portion can be prolonged, and the mounting reliability of the battery can be improved.

In some embodiments, the extension portions on the two sides of the battery mounting space in the first direction each are provided with the mounting structure.

In the above technical solution, the extension portions on the two sides of the battery mounting space in the first direction can both support the battery within the battery mounting space, and the mounting structures on the two sides can disperse stress to alleviate problems such as deformation or fracture of the extension portion caused by stress concentration, prolong the service life of the shared extension portion, and improve the mounting reliability of battery.

In some embodiments, the mounting structures on the two sides of the battery mounting space have staggered orthographic projections on the projection plane perpendicular to the first direction.

In the above technical solution, the mounting structures on the two sides of the battery mounting space are configured to have staggered orthographic projections on the projection plane in the first direction, which further facilitates stress dispersion of the mounting structures on the two sides, and further alleviates problems such as deformation or fracture of the extension portions caused by stress concentration. Additionally, when the mounting structures on the two sides of the shared extension portion in the first direction have staggered orthographic projections on the projection plane perpendicular to the first direction, and the mounting structures on the two sides of the battery mounting space in the first direction have staggered orthographic projections on the projection plane perpendicular to the first direction, a plurality of extension portions can all be constructed with the same structure, facilitating simplified structure, ease of processing, cost reduction, and improved assembly efficiency.

In some embodiments, a plurality of the mounting structures are provided on a side of the extension portion facing the battery mounting space, at least two of which are spaced apart along a length direction of the extension portion.

In the above technical solution, this arrangement facilitates full utilization of space in the length direction of the extension portion to arrange a greater quantity of mounting structures, and thus helps to enhance the mounting stability of the battery or helps to increase the quantity of batteries mounted within the battery mounting space.

In some embodiments, the extension portion includes a mounting edge protruding into the battery mounting space, and the mounting structure is located on the mounting edge.

In the above technical solution, providing the mounting edge helps to reduce the difficulty of arranging the mounting structure, and easily achieves the mounting structure being located on the side of the extension portion facing the battery mounting space. Additionally, the mounting edge can provide direct or indirect support to the battery to some extent, so as to enhance the mounting stability of the battery.

In some embodiments, the mounting edge is located at a lower edge of the extension portion in a height direction of the extension portion.

In the above technical solution, positioning the mounting structure at a lower height helps to reduce the maintenance difficulty of the mounting structure, also facilitates the mounting connection between the mounting structure and the battery, and improves the compactness of coordination between the battery and the extension portion. This reduces space waste, allowing the saved space to be used to further increase the dimension of the battery, thereby further improving the volumetric energy density of the battery.

In some embodiments, a length direction of the mounting edge is the same as an extension direction of the extension portion; where the mounting edge is provided with a plurality of mounting structures spaced apart along the length direction of the mounting edge, or the mounting structure on the mounting edge is configured as one and extends along the length direction of the mounting edge.

In the above technical solution, since the length direction of the mounting edge is the same as the extension direction of the extension portion, this helps to reduce the processing difficulty of the mounting edge, allows the mounting edge to have a larger length dimension to accommodate a greater quantity of mounting structures. Arrangement of the plurality of mounting structures spaced apart along the length direction of the mounting edge helps to enhance the mounting stability of the battery or helps to increase the quantity of batteries mounted on the mounting edge.

Alternatively, providing only one mounting structure, extending along the length direction of the mounting edge, on the mounting edge helps to reduce the processing difficulty of the mounting structure. Moreover, the mounting structure extends along the length direction of the mounting edge, in other words, a length direction of the mounting structure is consistent with the length direction of the mounting edge. As a result, the mounting structure has a larger length dimension, a larger force-bearing area, or more connection positions, which facilitates simultaneous connection with a plurality of connection structures on the battery, improving the mounting reliability of the battery, or facilitates simultaneous mounting of a plurality of batteries.

In some embodiments, the battery installation frame further includes a reinforcing portion, the reinforcing portion being configured to connect at least two of the extension portions located on the same side of the main body portion.

In the above technical solution, this arrangement helps to enhance the overall structural strength of the battery installation frame, alleviate deformation of the extension portions caused by stress, and improve the mounting reliability of battery.

In some embodiments, the main body portion has the extension portions respectively arranged on two sides in a second direction intersecting the first direction.

In the above technical solution, the space in the first direction and the second direction can be fully utilized to mount batteries on two sides of the main body portion in the second direction Y, such as mounting two parts of the same battery located on the two sides of the main body portion or mounting two separate batteries on the two sides of the main body portion, thereby increasing the dimension or quantity of mounted batteries.

In some embodiments, the extension portions on the two sides of the main body portion in the second direction have the same extension direction, and the orthographic projections of the extension portions on the two sides of the main body portion in the second direction along the extension direction overlap.

In the above technical solution, this arrangement allows a first extension portion and a first extension portion to simultaneously mount two parts of the same battery located on two sides of the battery in the width direction of the vehicle beam, enabling a larger dimension of the battery to reduce the quantity of batteries and simplify battery swapping complexity.

In some embodiments, a height of the extension portion tends to decrease in a direction away from the main body portion.

In the above technical solution, the height of the extension portion is configured to tend to decrease in a direction away from the main body portion, the height of the end of the extension portion connected to the main body portion is relatively large, while the height of the end away from the main body portion is relatively small. This can enhance the connection strength between the extension portion and the main body portion, improve the mounting reliability of battery by the extension portion, and reduce the weight of the extension portion, thereby reducing the load of the vehicle.

In some embodiments, the mounting structure is located at a lower edge of the extension portion, the lower edge of the extension portion extends along a horizontal line, and an upper edge of the extension portion tends to decrease in a direction away from the main body portion.

In the above technical solution, by disposing the mounting structure at the lower edge of the extension portion in a height direction the extension portion, the mounting structure is positioned at a lower height, facilitating the connection between the mounting structure and the battery and reducing the difficulty of battery mounting. The lower edge of the extension portion extending along a horizontal line ensures that the mounting structures are all at the same horizontal height, facilitating mounting operations of the battery. Meanwhile, the upper edge of the extension portion tending to decrease in a direction away from the main body portion ensures that the height of the end of the extension portion connected to the main body portion is relatively large, while the height of the end the extension portion away from the main body portion is relatively small, which can enhance the connection strength between the extension portion and the main body portion, improve the mounting reliability of battery by the extension portion, and reduce the weight of the extension portion, thereby reducing the load of the vehicle.

In some embodiments, the extension portion is provided with a second weight-reducing structure and/or a second reinforcing structure.

In the above technical solution, providing the second weight-reducing structure helps to reduce the weight of the extension portion, facilitating a lightweight design of the extension portion; and/or, providing the second reinforcing structure helps to enhance the structural strength of the extension portion, alleviating the problem of deformation caused by stress on the extension portion.

According to a second aspect, an embodiment of this application provides a frame assembly, including: a vehicle beam, where the vehicle beam includes two longitudinal beams extending along a first direction and spaced apart along a second direction; and the battery installation frame according to any of the above embodiments, where the frame body is installed to the vehicle beam, and the docking structure is located between the two longitudinal beams.

In the above technical solution, by disposing the docking structure between the two longitudinal beams of the vehicle beam, the two longitudinal beams can provide a certain degree of protection to the docking structure, reducing damage to the docking structure and prolonging the service life of the docking structure. Additionally, the docking structure can fully utilize the space between the two longitudinal beams to improve space utilization, facilitating an increase in the dimension and volumetric energy density of the battery.

In some embodiments, a docking interface of the docking structure is higher than a bottom surface of the longitudinal beams and is disposed downward.

In the above technical solution, since the docking interface of the docking structure is higher than the bottom surface of the longitudinal beams, the docking interface has a greater ground clearance, providing better protection. Moreover, the height setting of the docking interface helps to save the space to increase the height dimension of the battery, allowing at least a portion of the battery to extend between the two longitudinal beams, improving the compactness of the coordination between the battery installation frame and the battery, fully utilizing space, and increasing the dimension and volumetric energy density of the battery. Additionally, configuring the docking interface to face downward enables the battery to achieve docking with the docking structure while the battery is mounted from bottom to top, thereby improving swapping efficiency.

According to a third aspect, an embodiment of this application provides a vehicle including a battery and the frame assembly according to any of the above embodiments, where the battery is mounted on the mounting structure and docked with the docking structure.

In the above technical solution, by providing the frame assembly, the mounting structure is used to mount the battery, and the docking structure enables the battery to form electrical and/or fluidic communication with the vehicle body to meet the electrical and/or fluidic communication requirements between the battery and the vehicle body. By integrating both the mounting structure and the docking structure on the frame body, their positional reference datum is consistent, facilitating improving the swapping efficiency and battery swapping success rate the battery.

In some embodiments, the battery includes two battery side portions and a battery central portion, where in a width direction of the vehicle beam, the two battery side portions are respectively located on two sides of the battery central portion, a top surface of the battery central portion is lower than a top surface of the battery side portions, to form an avoidance groove, between the two battery side portions and the battery central portion, that extends along a length direction of the vehicle beam and has an open top for avoiding the vehicle beam, the battery side portions are detachably connected to the mounting structure, and the top of the battery central portion has a docking portion for docking with the docking structure.

In the above technical solution, the structure of the battery is ingeniously designed to avoid the vehicle beam, such that the space on the two sides of the vehicle beam in the width direction of the vehicle beam is fully utilized, which allows the overall dimension of the battery to be increased, thereby increasing the volumetric energy density of the battery. When the battery side portions on the two sides are both connected to the mounting structure, the mounting reliability and stability of the battery can be enhanced. The docking portion is disposed at the top of the battery central portion, allowing the docking portion of the battery to easily dock with the docking structure located between the two longitudinal beams when the battery moves from bottom to top along the height direction of the vehicle.

The above description is only an overview of the technical solution of this application. To more clearly understand the technical means of this application, implementation can be carried out in accordance with the contents of the specification. Furthermore, to make the above and other purposes, features, and advantages of this application more apparent and understandable, the specific embodiments of this application are provided below.

### BRIEF DESCRIPTION OF DRAWINGS

Through reading the detailed description of the preferred embodiments below, various other advantages and benefits will become clear to those of ordinary skill in the art. The accompanying drawings are provided solely for the purpose of illustrating the preferred embodiments and are not considered to limit this application. Moreover, throughout all the accompanying drawings, identical components are denoted by identical reference signs. In the accompanying drawings:
FIG. 1 is a schematic structural diagram of a vehicle according to some embodiments of this application;
FIG. 2 is a schematic exploded view of a structure of a battery according to some embodiments of this application;
FIG. 3 is a schematic diagram of the assembly of a frame assembly and a battery according to some embodiments of this application;
FIG. 4 is a schematic diagram of a battery installation frame according to some embodiments of this application;
FIG. 5 is an enlarged view of portion A in FIG. 4;
FIG. 6 is a partial enlarged view of a battery installation frame according to another embodiment of this application;
FIG. 7 is an enlarged view of portion B in FIG. 4;
FIG. 8 is a schematic diagram of a battery according to an embodiment of this application;
FIG. 9 is a schematic diagram of a vehicle according to some embodiments of this application;
FIG. 10 is a bottom view of the vehicle in FIG. 9;
FIG. 11 is a cross-sectional view at line E-E in FIG. 9;
FIG. 12 sis a cross-sectional view at line F-F in FIG. 9;
FIG. 13 is an orthographic projection view of a battery installation frame according to some embodiments of this application; and
FIG. 14 shows a cross-sectional view of a battery installation frame according to some embodiments of this application.

Description of reference signs: vehicle 1000; vehicle body 101; frame assembly 100; battery installation frame 10; vehicle beam 20; longitudinal beam 201; cross beam 202; battery 30; battery side portion 30a; battery central portion 30b; avoidance groove 30c; docking portion 30d; box 301; first portion 3011; second portion 3012; battery cell 302; controller 40; motor 50; frame body 10a; main body portion 1; first direction X; first main wall 11; second main wall 12; beam avoidance groove 13; avoidance opening 14; beam connection structure 15; extension portion 2; second direction Y; height direction Z of extension portion; shared extension portion 2a; second weight-reducing structure 21; second reinforcing structure 22; mounting edge 24; mounting structure 3; battery mounting space 4; reinforcing portion 5; docking structure 6; bearing frame 61; bearing portion 611; leg portion 612; first weight-reducing structure 613; first reinforcing structure 614; and docking apparatus 62.

### DESCRIPTION OF EMBODIMENTS

The embodiments of the technical solutions of this application will be described in detail below with reference to the accompanying drawings. The following embodiments are merely used to more clearly illustrate the technical solutions of this application and are therefore provided only as examples, not to limit the scope of protection of this application.

Unless otherwise defined, all technical and scientific terms used herein have the same meaning as commonly understood by those skilled in the technical field of this application; the terms used herein are for the purpose of describing specific embodiments only and are not intended to limit this application; and the terms "including" and "having" and any variations thereof in the specification, claims, and drawing descriptions of this application are intended to cover non-exclusive inclusion.

In the description of the embodiments of this application, technical terms such as "first" and "second" are used only to distinguish different objects and should not be understood as indicating or implying relative importance or implicitly indicating the quantity, specific order, or hierarchical relationship of the technical features indicated. In the description of the embodiments of this application, the term "a plurality of" means two or more, unless explicitly and specifically defined otherwise.

Reference to an "embodiment" herein means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" merely describes an association relationship between associated objects, indicating that three relationships may exist, for example, X and/or Y may indicate: X alone, X and Y together, or Y alone. Additionally, the character "/" herein generally indicates an "or" relationship between the associated objects.

In the description of the embodiments of this application, the term "a plurality of" refers to two or more (including two), similarly, "a plurality of groups" refers to two or more groups (including two groups), and "a plurality of pieces" refers to two or more pieces (including two pieces).

In the description of the embodiments of this application, the orientation or positional relationships indicated by technical terms such as "longitudinal," "transverse," "length," "width," "thickness," "upper," "lower," "front," "rear," "left," "right," "vertical," "horizontal," "top," "bottom," "inner," and "outer" are based on the orientation or positional relationships shown in the accompanying drawings, and are merely for convenience in describing the embodiments of this application and simplifying the description, rather than indicating or implying that the apparatus or element referred to must have a specific orientation, be constructed, and operate in a specific orientation, and therefore should not be construed as limiting the embodiments of this application.

In the description of the embodiments of this application, unless otherwise explicitly specified and limited, technical terms such as "installation," "connection," "linkage," and "fixing" should be understood in a broad sense, for example, as a fixed connection, a detachable connection, or an integral formation; a direct connection, an indirect connection through an intermediary, or an internal communication or interaction relationship between two elements. Those of ordinary skill in the art can understand the specific meanings of these terms in the embodiments of this application based on specific circumstances.

From the perspective of current market trends, the application of traction batteries is becoming increasingly widespread. Traction batteries are not only used in energy storage systems such as hydroelectric, thermal, wind, and solar power stations, but also widely applied in electric vehicles such as electric bicycles, electric motorcycles, and electric cars, as well as in military equipment and aerospace fields. With the continuous expansion of the application fields of traction batteries, their market demand is also continuously increasing.

In some vehicles in the related art, the traction battery is installed at the bottom of the vehicle, and the traction battery needs to be connected to the vehicle through electrical wires and pipelines to achieve electrical and fluid connections. However, the operations of connecting electrical wires and pipelines are cumbersome, resulting in low battery swapping efficiency. Moreover, the suspension of electrical wires and pipelines poses risks of disconnection and damage, affecting the reliability of the electrical and fluid connections between the vehicle and the traction battery.

To address this, this application provides a battery installation frame, where the battery installation frame includes a frame body, a mounting structure, and a docking structure, the frame body is configured to be installed to a vehicle body, the mounting structure is integrated on the frame body and configured to mount a battery, and the docking structure is also integrated on the frame body and configured to connect the vehicle body and dock with the battery, so as to enable the battery to form electrical and/or fluidic communication with the vehicle body.

When such a battery installation frame is used to stall the battery to the vehicle, the battery can be mounted and installed via the mounting structure integrated on the frame body, and the electrical and/or fluidic communication between the battery and the vehicle body can be achieved via the docking structure integrated on the frame body, eliminating the need to connect electrical wires and pipelines, simplifying the complex battery swapping operation, improving swapping efficiency, and reducing or avoiding the risks of disconnection and damage due to suspended electrical wires and pipelines, thereby improving the reliability of the electrical and/or fluidic communication. Moreover, since both the mounting structure and the docking structure are integrated on the frame body, a reference datum for the mounting position of the battery and a reference datum for the electrical/fluid docking position are consistent, that is, the frame body, thereby improving the battery swapping success rate.

However, if only the mounting structure is provided on the frame body while the docking structure is provided outside the frame body, for example, the docking structure is provided on another mounting frame spaced apart from the frame body or the docking structure is provided on the vehicle body, such as on the vehicle beam, a reference datum for the mounting structure and a reference datum for the docking structure would be inconsistent. Consequently, there may be some deviation in the relative positional accuracy between the mounting structure and the docking structure, posing risks of mounting connection failure or electrical/fluid docking failure, affecting the swapping efficiency and battery swapping success rate.

In short, in the context of the increasing demand for battery swapping efficiency, the battery installation frame of the embodiments of this application can improve the swapping efficiency and battery swapping success rate.

The battery disclosed in the embodiments of this application can be used in electrical apparatuses that use a battery as a power source or in various energy storage systems that use a battery as an energy storage element. The electrical apparatuses may include, but are not limited to, mobile phones, tablets, laptops, electric toys, electric tools, battery-powered bikes, electric vehicles, ships, and spacecrafts. Electric toys may include fixed or mobile electric toys, such as gaming consoles, electric car toys, electric ship toys, and electric airplane toys, while spacecrafts may include airplanes, rockets, space shuttles, and spaceships, and the like.

For ease of explanation in the following embodiments, an embodiment of this application is described using a vehicle 1000 as an example.

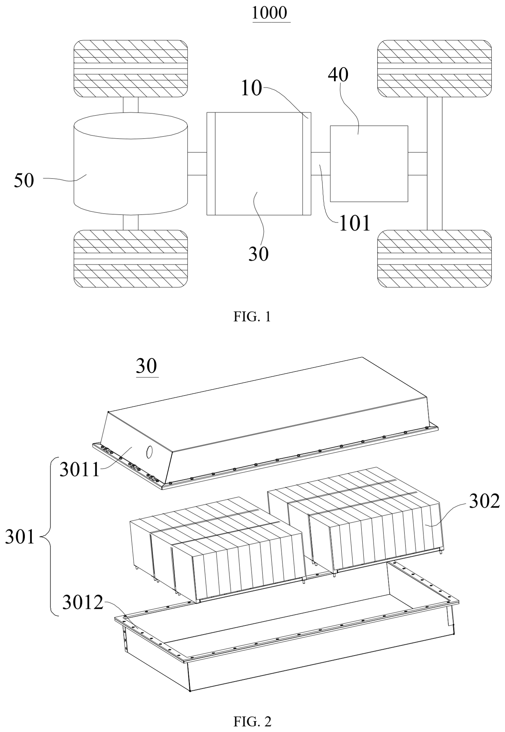

Referring to FIG. 1, FIG. 1 is a schematic structural diagram of a vehicle 1000 according to some embodiments of this application. The vehicle 1000 may be a fuel vehicle, a gas vehicle, or a new energy vehicle, where the new energy vehicle may be a battery electric vehicle, a hybrid electric vehicle, or an extended-range electric vehicle. A battery 30 is provided inside the vehicle 1000, and the battery 30 may be disposed at the bottom, front, or rear of the vehicle 1000. The battery 30 may be configured to supply power to the vehicle 1000, for example, the battery 30 may serve as an operational power source for the vehicle 1000. The vehicle 1000 may further include a controller 40 and a motor 50, where the controller 40 is configured to control the battery 30 to supply power to the motor 50, for example, for the operational power requirements during the startup, navigation, and driving of the vehicle 1000.

In some embodiments of this application, the battery 30 may not only serve as an operational power source for the vehicle 1000 but also as a driving power source for the vehicle 1000, replacing or partially replacing fuel or natural gas to provide driving power for the vehicle 1000.

Referring to FIG. 2, FIG. 2 is an exploded view of a battery 30 according to some embodiments of this application. The battery 30 includes a box 301 and a battery cell 302, with the battery cell 302 accommodated within the box 301. The box 301 is configured to provide an accommodation space for the battery cell 302, and the box 301 may adopt various structures. In some embodiments, referring to FIG. 2, the box 301 may include a first portion 3011 and a second portion 3012, where the first portion 3011 and the second portion 3012 are mutually covered, and the first portion 3011 and the second portion 3012 together define an accommodation space for accommodating the battery cell 302. The second portion 3012 may be a hollow structure with an open end, the first portion 3011 may be a plate-like structure, and the first portion 3011 covers the open end of the second portion 3012, such that the first portion 3011 and the second portion 3012 together define the accommodation space; alternatively, both the first portion 3011 and the second portion 3012 may be hollow structures with an open side, and the open side of the first portion 3011 covers the open side of the second portion 3012. Of course, the box 301 formed by the first portion 3011 and the second portion 3012 may have various shapes, such as a cylinder and a cuboid.

The battery 30 may include a battery cell 302, and the battery cell 302 may be provided in plurality. The plurality of battery cells 302 may be connected in series, parallel, or a combination thereof, where the combination refers to both series and parallel connections among the plurality of battery cells 302. The plurality of battery cells 302 may be directly connected in series, parallel, or a combination thereof, and the entirety formed by the plurality of battery cells 302 is accommodated within the box 301; alternatively, the battery 30 may also include a plurality of battery cells 302 first connected in series, parallel, or a combination to form a battery module, and a plurality of battery modules are then connected in series, parallel, or a combination to form an entirety, which is accommodated within the box 301. The battery 30 may further include other structures, for example, the battery 30 may also include a busbar for achieving electrical connections between the plurality of battery cells 302.

In this application, the battery cell 302 may include a lithium-ion secondary battery, a lithium-ion primary battery, a lithium-sulfur battery, a sodium-lithium-ion battery, a sodium-ion battery, magnesium-ion battery, or the like, which is not limited in the embodiments of this application. The battery cell 302 may be cylindrical, flat, cuboidal, or in other shapes, which is also not limited in the embodiments of this application. The battery cells 302 are generally classified into three types based on packaging methods: cylindrical battery cells, prismatic battery cells, and pouch battery cells, which is also not limited in the embodiments of this application.

The battery cell 302 includes a housing, an electrode assembly, and an electrolyte, where the housing is configured to accommodate the electrode assembly and the electrolyte. The electrode assembly consists of a positive electrode plate, a negative electrode plate, and a separator. The battery cell 302 operates primarily by the movement of metal ions between the positive electrode plate and the negative electrode plate. The material of the separator is not limited and may be, for example, polypropylene or polyethylene.

Generally, the positive electrode plate may include a positive electrode current collector and a positive electrode active material layer, where the positive electrode active material layer is directly or indirectly applied on the positive electrode current collector, and the positive electrode current collector not coated with the positive electrode active material layer protrudes from the positive electrode current collector coated with the positive electrode active material layer, serving as a positive electrode tab. For example, in a lithium-ion battery, the material of the positive electrode current collector may be aluminum, and the material of the positive electrode active material layer may be lithium cobalt oxide, lithium iron phosphate, ternary lithium, lithium manganese oxide, or the like.

Generally, the negative electrode plate may include a negative electrode current collector and a negative electrode active material layer, where the negative electrode active material layer is directly or indirectly applied on the negative electrode current collector, and the negative electrode current collector not coated with the negative electrode active material layer protrudes from the negative electrode current collector coated with the negative electrode active material layer, serving as a negative electrode tab. The material of the negative electrode current collector may be copper, and the material of the negative electrode active material layer may be carbon, silicon, or the like.

To ensure that large currents can pass without causing fusing, the positive electrode tab is provided in plurality and the plurality of positive electrode tabs are stacked together; and the negative electrode tab is provided in plurality and the plurality of negative electrode tabs are stacked together. The electrode assembly may be a wound structure or may be a laminated structure, which is not limited in the embodiments of this application.

As shown in FIGs. 1, 3, and 4, an embodiment of this application provides a battery installation frame 10 configured to install a battery 30 to a vehicle body 101. The battery installation frame 10 includes a frame body 10a, a mounting structure 3, and a docking structure 6, where the frame body 10a is configured to be installed to the vehicle body 101. The mounting structure 3 is integrated on the frame body 10a and configured to mount the battery 30. The docking structure 6 is also integrated on the frame body 10a and configured to connect the vehicle body 101 and dock with the battery 30, so as to enable the battery 30 to form electrical and/or fluidic communication with the vehicle body 101.

It is worth noting that the battery installation frame 10 of this embodiment of this application can be used for battery swapping under frame of the vehicle 1000, where the battery swapping under frame (battery swapping under frame) refers to a method of replenishing vehicle energy by flexibly replacing a swappable battery system installed under the vehicle chassis. The swappable battery system (swappable battery system) is a traction battery system (referred to as battery 30 in this application) that is entirely replaced during the battery swapping process of the vehicle 1000. For example, the swappable battery system generally includes a power battery, a battery management system, a swapping electrical interface, a swapping cooling interface, a swapping mechanical interface, and the like, and can be charged and discharged in a non-vehicle-mounted state. The terms and definitions of the embodiments of this application may be in accordance with GB/T 19596 Terminology of Electric Vehicles

Thus, by integrating the mounting structure 3 on the frame body 10a, during the installation of the frame body 10a to the vehicle body 101, the connection between the mounting structure 3 and the battery 30 achieves the mounting of the battery 30 to the frame body 10a. Additionally, by integrating the docking structure 6 on the frame body 10a, when the battery 30 is mounted to the frame body 10a via the mounting structure 3, the battery 30 can dock with the docking structure 6 to form electrical and/or fluidic communication. The docking structure 6 also has a connection relationship with the vehicle body 101, forming an electrical and/or fluidic communication, thereby meeting the requirement for the battery 30 to achieve electrical and/or fluidic communication with the vehicle body 101 through docking with the docking structure 6.

The structure of the mounting structure 3 is not limited, and the mounting structure 3 may include, but is not limited to, a mounting slot, a mounting hole, a mounting protrusion, a mounting pin, or a mounting screw, and no further limitations are made herein. The connection method between the docking structure 6 and the vehicle body 101 is also not limited. For example, the docking structure 6 and the vehicle body 101 may be connected through docking with docking terminals or may be connected by plugging in electrical wires and/or pipelines.

For example, when the docking structure 6 is configured to achieve an electrical connection, it can be used for current transfer between the vehicle 1000 and the battery 30, enabling the battery 30 to supply power to the vehicle 1000 or allowing the vehicle 1000 to control the battery 30. When the docking structure 6 is configured to achieve a fluid connection, it can be used for heat transfer between a thermal management system of the vehicle 1000 and the battery 30, so the thermal management system can be used to regulate the temperature of the battery 30, thereby improving the operational reliability and safety of the battery 30, or the thermal management system can be used to absorb the residual heat of the battery 30 to meet the heat source requirements of a heat pump air conditioning system of the vehicle 1000, which will not be elaborated herein. Thus, by providing the docking structure 6 on the battery installation frame 10, the structural design of the battery installation frame 10 can meet the electrical and/or fluidic communication requirements between the battery 30 and the vehicle body 101, simplifying the structural design of the vehicle body 101 and the battery 30. It should be noted that the position of the docking structure 6 is not limited and can be specifically selected based on the form of the battery installation frame 10.

In some embodiments, the docking structure 6 may include a first docking structure and a second docking structure, where the first docking structure is configured to dock with electrical terminals on the battery 30, and the second docking structure is configured to dock with fluid ports on the battery 30. The relative positions of the first docking structure and the second docking structure are not limited and may, for example, be spaced apart in the horizontal direction, such as left-right or front-back, to avoid mutual interference between the first docking structure and the second docking structure during respective docking. The first docking structure and the second docking structure mentioned above are only examples of parts of the docking structure 6 and do not represent a limitation.

When such a battery installation frame 10 is used to install the battery 30 to the vehicle body 101, the battery 30 can be mounted and installed via the mounting structure 3 integrated on the frame body 10a, and the electrical and/or fluidic communication between the battery 30 and the vehicle body 101 can be achieved via the docking structure 6 integrated on the frame body 10a, eliminating the need to connect electrical wires and pipelines, simplifying the complex battery swapping operation, and improving swapping efficiency. Moreover, since both the mounting structure 3 and the docking structure 6 are integrated on the frame body 10a, a reference datum for the mounting position of the battery 30 and a reference datum for the electrical/fluid docking position are consistent, that is, the frame body 10a, thereby improving the battery swapping success rate.

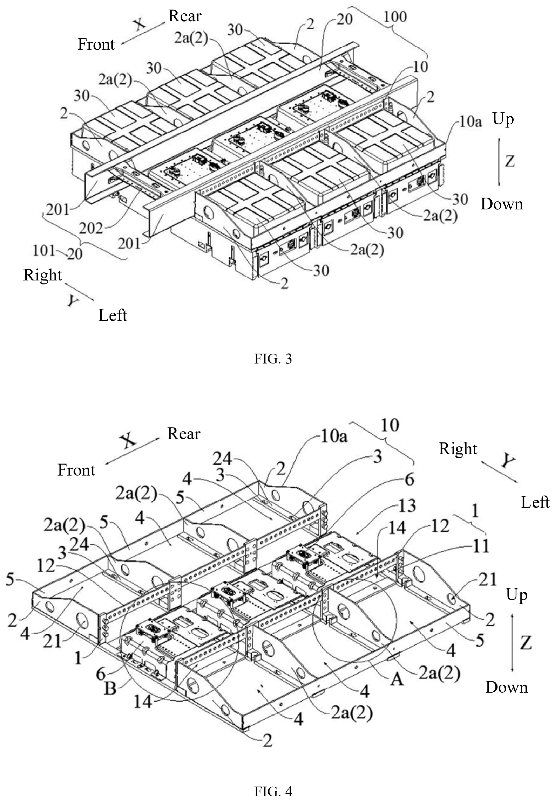

In some embodiments, referring to FIG. 4, the frame body 10a includes a main body portion 1 and an extension portion 2.

Referring to FIGs. 3 and 4, the main body portion 1 is configured to be installed to the vehicle body 101, the docking structure 6 is disposed on the main body portion 1, one end of the extension portion 2 is connected to the main body portion 1, another end extends in a direction away from the main body portion 1, and the mounting structure 3 is disposed on the extension portion 2.

"One end of the extension portion 2 is connected to the main body portion 1, and another end extends in a direction away from the main body portion 1" includes the extension portion 2 having one end connected to the main body portion 1 and another end extending obliquely or vertically in a direction away from the main body portion 1, with the specific extension direction of the extension portion 2 not being limited.

Thus, disposing the docking structure 6 on the main body portion 1 facilitates the connection between the vehicle body 101 and the docking structure 6 when the main body portion 1 is mounted to the vehicle body 101. The mounting structure 3 is disposed on the extension portion 2, such that the docking structure 6 and the mounting structure 3 are respectively disposed at different positions of the frame body 10a, which prevents mutual interference between the mounting structure 3 and the docking structure 6, and helps to reduce the difficulty of coordinating the docking structure 6 and the mounting structure 3 with the battery 30.

Additionally, when the extension portion 2 extends along the width direction of the vehicle body 101 (that is, the second direction Y shown in FIG. 4), the extension portion 2 can be located on one side of the battery 30 in the length direction of the vehicle body 101 (that is, the first direction X shown in FIG. 4). Since the length dimension of the vehicle body 101 is relatively ample compared to the width dimension, configuring the extension portion 2 and the mounting structure 3 disposed on the extension portion 2 to occupy only the space of the battery 30 in the length direction of the vehicle body 101 can help to reduce the space of the battery 30 occupied in the width direction of the vehicle body 101, thereby facilitating an increase in the dimension of the battery 30 in the width direction of the vehicle body 101, and increasing the volumetric energy density of the battery 30.

In some embodiments, referring to FIG. 4, the main body portion 1 includes a beam avoidance groove 13, the beam avoidance groove 13 has an opening running through along a first direction X, and the docking structure 6 is located within the beam avoidance groove 13. For example, the first direction X may be set to consistent with the length direction of the vehicle beam 20 of the vehicle body 101. In the embodiments of this application, the length direction of the vehicle body 101, the length direction of the vehicle 1000, and the length direction of the vehicle beam 20 are consistent, and the width direction of the vehicle body 101, the width direction of the vehicle 1000, and the width direction of the vehicle beam 20 are consistent.

Thus, by providing the beam avoidance groove 13 on the main body portion 1, when the main body portion 1 is connected to the vehicle body 101, at least a portion of the vehicle beam 20 can extend into the beam avoidance groove 13, with the extension direction of the vehicle beam 20 being the same as the through direction of the opening, which avoids interference between the battery installation frame 10 and the vehicle beam 20, improves the compactness of the coordination between the battery installation frame 10 and the vehicle beam 20, and facilitates the arrangement of the battery 30 in the space near the vehicle beam 20, thereby helping to increase the dimension and volumetric energy density of the battery 30. Moreover, by disposing the docking structure 6 within the beam avoidance groove 13, the space within the beam avoidance groove 13 can be fully utilized to improve space utilization and reduce the space occupied by the docking structure 6 in other positions of the battery installation frame 10, thereby increasing the dimension and volumetric energy density of the battery 30. Additionally, the docking structure 6 can be protected by the inner wall of the beam avoidance groove 13, thereby reducing the probability of the docking structure 6 being damaged by collisions, alleviating the problem of corrosion failure of the docking structure 6 caused by mud or water, improving docking reliability and stability, and reducing the risk of electrical failures of the docking structure 6 due to erosion by mud or water splash. Furthermore, the docking structure 6 does not need to occupy the space outside the vehicle beam 20, does not interfere with the connection between the battery installation frame 10 and the vehicle beam 20 or the battery 30, while also helping to shorten the distance between the vehicle body 101 and the docking structure 6 to lower the difficulty of connecting the vehicle body 101 and the docking structure 6.

For example, a beam connection structure 15 may be provided on the main body portion 1 to achieve the connection between the main body portion 1 and the vehicle beam 20. Thus, since the main body portion 1 cooperates with the vehicle beam 20 through the beam avoidance groove 13, both the main body portion 1 and the extension portion 2 can have a portion close to the vehicle beam 20. In this way, connecting the beam connection structure 15 to the vehicle beam 20 can help to install the battery installation frame 10 to the vehicle beam 20.

In some embodiments, referring to FIG. 4, the main body portion 1 includes a plurality of first main walls 11 spaced apart along the first direction X, an avoidance opening 14 is formed between two adjacent first main walls 11, and a docking interface (for example, an electrical interface and/or a fluid interface) of the docking structure 6 is higher than the first main walls 11 and is disposed corresponding to the avoidance opening 14. Herein, a height direction of the vehicle body 101 is defined as the vertical direction, and the height direction of the vehicle body 101 is consistent with a height direction of the vehicle 1000, both being the gravitational direction.

Thus, since the docking interface of the docking structure 6 is higher than the first main walls 11, the ground clearance of the docking interface of the docking structure 6 is relatively large, providing better protection. Moreover, the height setting of the docking interface of the docking structure 6 helps to save the space to increase the height dimension of the battery 30, improves the compactness of the coordination between the battery installation frame 10 and the battery 30, makes full use of the space, and increasing the dimension and volumetric energy density the battery 30. Additionally, by providing the avoidance opening 14, when the battery 30 is mounted on the battery installation frame 10, a portion of the battery 30 can extend upward into the avoidance opening 14 and dock with the docking interface of the docking structure 6, thereby meeting docking requirements.

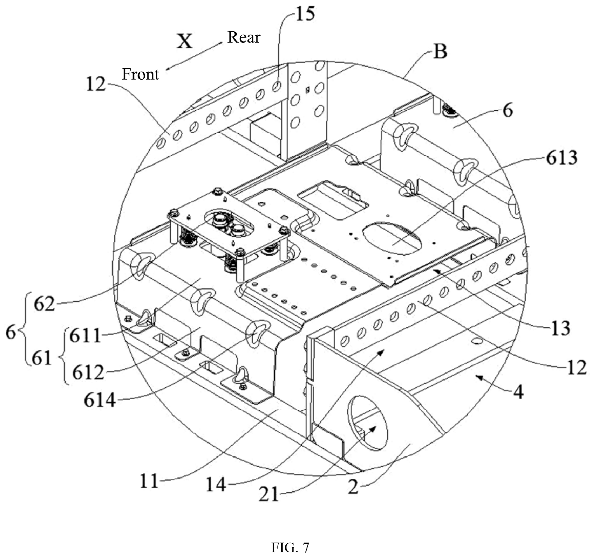

In some embodiments, referring to FIG. 7, the docking structure 6 includes a bearing frame 61 and a docking apparatus 62, and the bearing frame 61 includes a bearing portion 611 and leg portions 612, where the docking apparatus 62 is disposed on the bearing portion 611, and the leg portions 612 extend from two ends of the bearing portion 611 in the first direction X toward the first main wall 11 and are connected to the first main wall 11.

In the above technical solution, by disposing the docking apparatus 62 on the bearing portion 611 and having the leg portions 612 extend from two ends of the bearing portion 611 in the first direction X toward the first main body portion 1 and connect to the first main wall 11, the bearing portion 611 can be spaced apart from the first main wall 11, allowing the bearing frame 61 to be configured in a shape that can upwardly avoid the battery 30, and facilitating an increase in the setting height of the docking apparatus 62 to save the space and increase the height dimension of the battery 30. Furthermore, when the first direction X is the length direction of the vehicle 1000, disposing the two leg portions 612 on two sides of the bearing portion 611 in the first direction X occupies only the space of the battery 30 in the length direction of the vehicle 1000, which is relatively ample, reducing the space of the battery 30 occupied in the width direction of the vehicle 1000, thereby facilitating an increase in the dimension and energy density of the battery 30 in the width direction of the vehicle 1000.

In some embodiments, referring to FIG. 7, the bearing portion 611 has a first weight-reducing structure 613, and/or a first reinforcing structure 614 is provided at a connection between the leg portion 612 and the bearing portion 611.

Thus, providing the first weight-reducing structure 613 on the bearing portion 611 helps to reduce the weight of the bearing portion 611, thereby reducing the weight of the docking structure 6 to achieve a lightweight design of the docking structure 6. The first weight-reducing structure 613 may include, but is not limited to, weight-reducing holes, weight-reducing slots, or thinning treatments.

Thus, providing the first reinforcing structure 614 at the connection between the bearing portion 611 and the leg portion 612 helps to enhance the structural strength at the connection between the bearing portion 611 and the leg portion 612, and reduce the probability of fracture at the connection between the bearing portion 611 and the leg portion 612, thereby facilitating a reduction in the thickness of the bearing portion 611 and the leg portion 612 to achieve a lightweight design of the docking structure 6. The first reinforcing structure 614 may include, but is not limited to, reinforcing ribs, strip-like reinforcing protrusions, or localized thickening of the extension portion 2, and when the first reinforcing structure 614 is configured as reinforcing ribs, the structural form of the reinforcing ribs is not limited and may be, for example, linear, curved, or cross-shaped.

In some embodiments, referring to FIG. 7, the bearing frame 61 is an integrally formed piece and is assembled and connected to the first main wall 11.

Thus, configuring the bearing frame 61 as an integrally formed piece helps to reduce the difficulty of setting up the bearing frame 61, and helps to ensure the overall structural strength of the bearing frame 61. Additionally, the assembly connection between the bearing frame 61 and the first main wall 11 helps to reduce the difficulty of assembling and disassembling the bearing frame 61 and the first main wall 11, improving the production efficiency of the battery installation frame 10.

Additionally, the bearing frame 61 may not be an integrally formed piece; for example, it may alternatively be an assembly connection between the bearing portion 611 and the leg portion 612.

The term "assembly connection" includes, but is not limited to, welding, bolting, snapping, or plugging.

In some embodiments, referring to FIG. 4, the avoidance opening 14 is provided in plurality, the plurality of avoidance openings are spaced apart along the first direction X, and each of the avoidance openings 14 is provided with the corresponding docking structure 6.

Thus, by providing a plurality of avoidance openings 14, when the plurality of batteries 30 are mounted on the battery installation frame 10, the requirements for electrical and/or fluidic docking between the plurality of batteries 30 and the vehicle body 101 can be respectively achieved through a plurality of docking structures 6, to be specific, each battery 30 can meet the electrical and/or fluidic communication requirements with the vehicle body 101 through the docking of the corresponding docking structure 6, allowing the vehicle 1000 to achieve independent communication with individual batteries 30 through the corresponding docking structures 6, facilitating independent power supply operation or individual control of each battery 30 by the vehicle body 101.

In some embodiments, referring to FIGs. 4 and 7, the main body portion 1 includes second main walls 12 extending along the first direction X, the second main walls 12 being two in quantity and spaced apart along a second direction Y intersecting the first direction X (for example, at an acute angle, obtuse angle, or right angle), and the two second main walls 12 being connected to two ends of each of the first main walls 11 in the second direction Y to form the beam avoidance groove 13 with an open top between the first main walls 11 and the second main walls 12, and the extension portion 2 is connected to the second main wall 12.

Thus, by providing the second main walls 12, the plurality of first main walls 11 and the second main walls 12 can be connected as an integral structure, which helps to reduce the arrangement and forming difficulty of the main body portion 1 and helps to define the extension direction of the beam avoidance groove 13, making the beam avoidance groove 13 extend along the first direction X. Additionally, since the beam avoidance groove 13 has an open top, the main body portion 1 can be pushed upward from bottom to top, allowing the vehicle beam 20 to enter the beam avoidance groove 13, thereby facilitating the reduction of the assembly difficulty of the battery installation frame 10 to the vehicle body 101. For a vehicle body 101 that has already been assembled, the battery installation frame 10 can be subsequently installed, making the battery installation frame 10 applicable to various vehicle models. This application is not limited thereto. For example, in other embodiments of this application, the beam avoidance groove 13 may be configured with an open bottom, allowing the battery installation frame 10 to be assembled with the vehicle body 101 during the assembly process of the vehicle body 101.

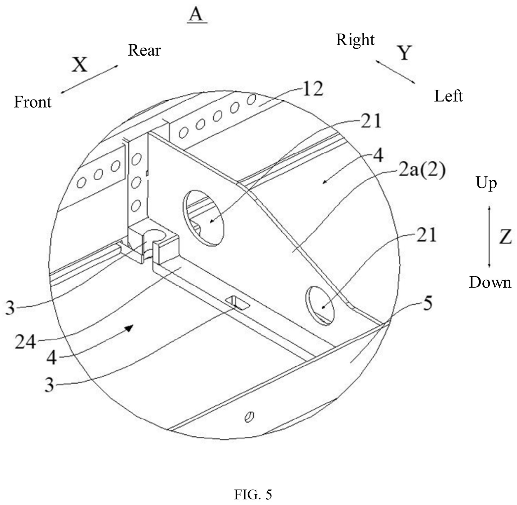

Referring to FIGs. 4 and 5, connecting the extension portion 2 to the side of the second main wall 12 away from the first main wall 11 in the second direction Y can increase the length occupied by the extension portion 2 in the second direction Y while avoiding interference between the extension portion 2 and the vehicle beam 20, thereby facilitating the expansion of the battery mounting space 4 in the second direction Y. Additionally, it facilitates the connection between the extension portion 2 and the main body portion 1.

In some embodiments, referring to FIG. 4, a plurality of the extension portions 2 spaced apart along the first direction X are provided on one side of the main body portion 1, and a battery mounting space 4 is defined between two adjacent extension portions 2.

Thus, by providing a plurality of extension portions 2 spaced apart along the first direction X on one side of the main body portion 1, and defining the battery mounting space 4 between two adjacent extension portions 2 along the first direction X, the extension portions 2 can play a role in protecting the battery 30.

Additionally, when the first direction X is set as the length direction of the vehicle 1000 and the mounting structure 3 is disposed on the extension portion 2, neither the mounting structure 3 nor the extension portion 2 occupies the space in the width direction of the vehicle 1000, thereby increasing the dimension of the battery mounting space 4 in the width direction of the vehicle 1000, increasing the dimension of the battery in the width direction of the vehicle 1000, and facilitating an increase in the volumetric energy density of the battery 30. Moreover, setting the first direction X as the length direction of the vehicle 1000, due to the relatively large longitudinal space of the vehicle 1000, also helps to increase the dimension or quantity of battery mounting spaces 4 in the length direction of the vehicle 1000, further increasing the volumetric energy density or quantity of the battery 30.

In some embodiments, referring to FIG. 4, a plurality of battery mounting spaces 4 spaced apart along the first direction X are provided on one side of the main body portion 1.

In the above technical solution, by providing a plurality of battery mounting spaces 4 spaced apart along the first direction X on one side of the main body portion 1 with, the battery installation frame 10 can have the function of mounting a plurality of batteries 30 in the first direction X, that is, achieving a multi-pack mounting function, facilitating flexible battery swapping. Moreover, by defining the battery mounting space 4 with the extension portion 2, issues such as collision and heat transfer between batteries 30 in two adjacent battery mounting spaces 4 along the first direction X can be mitigated.

In some embodiments, referring to FIG. 4, when a plurality of battery mounting spaces 4 spaced apart along the first direction X are provided on one side of the main body portion 1, the docking structure 6 may be provided in plurality, the plurality of docking structures are spaced apart along the first direction X, and the plurality of docking structures 6 are arranged opposite the plurality of battery mounting spaces 4 along a second direction Y intersecting the first direction X (for example, at an acute angle, obtuse angle, or right angle).

Thus, the distribution direction of the docking structures 6 does not occupy the space of the battery mounting spaces 4 in the first direction X, to be specific the docking structures 6, while achieving docking with the battery 30, do not occupy the space in the arrangement direction of the plurality of battery mounting spaces 4, facilitating an increase in the quantity or dimension of the battery mounting spaces 4 arranged along the first direction X, improving space utilization, and enabling the battery installation frame 10 to mount a greater quantity or larger batteries 30.

In some embodiments, referring to FIG. 4, both the battery mounting spaces 4 and the avoidance openings 14 may be configured as a plurality spaced apart along the length direction of the vehicle beam 20 (for example, the first direction X), with the avoidance openings 14 in a one-to-one correspondence with the battery mounting spaces 4 along the width direction of the vehicle beam 20 (for example, the second direction Y), each of the avoidance openings 14 being provided with a corresponding docking structure 6. Thus, when the battery 30 has a large dimension, the portion of the battery 30 corresponding to the battery mounting space 4 can extend into the battery mounting space 4, and the portion corresponding to the avoidance opening 14 can extend into the avoidance opening 14 to dock with the docking structure 6.

In some embodiments, referring to FIG. 4, the mounting structure 3 is arranged on a side of the extension portion 2 facing the battery mounting space 4.

In the embodiments of this application, the battery installation frame 10 is provided with a mounting structure 3 capable of connecting to the battery 30, and when the battery 30 is connected to the mounting structure 3, at least a portion of the battery 30 can be accommodated in the battery mounting space 4, presenting a mounted state. In some embodiments of this application, when the battery installation frame 10 includes a plurality of battery mounting spaces 4, the battery installation frame 10 is provided with a mounting structure 3 corresponding to each battery mounting space 4, such that each of the battery mounting spaces 4 can be used to mount a battery 30, and the mounting structures 3 corresponding to different battery mounting spaces 4 can be independent of each other, allowing each battery mounting space 4 to independently replace the mounted battery 30.

Thus, by arranging the mounting structure 3 on the side of the extension portion 2 facing the battery mounting space 4, the mounting structure 3 corresponds to the battery mounting space 4 it faces and is configured to mount the battery 30 in the battery mounting space 4 that the mounting structure 3 faces, thereby clearly defining the correspondence between the mounting structure 3 and the battery mounting space 4. When the battery 30 is inserted into the battery mounting space 4, it can be connected to the mounting structure 3 facing the battery mounting space 4, facilitating the mounting of the battery 30. Moreover, when there are a plurality of battery mounting spaces 4, the mounting structures 3 corresponding to different battery mounting spaces 4 are positioned differently and do not interfere with each other. This allows the mounting structure 3 corresponding to each battery mounting space 4 to have ample space for flexible configuration, enabling the mounting structure 3 to more easily and reliably mount the battery 30.

In some embodiments, referring to FIG. 4, at least one extension portion 2 located in the middle among the plurality of extension portions 2 arranged along the first direction X is a shared extension portion 2a, the shared extension portion 2a has the battery mounting space 4 on each of two sides in the first direction X, and the mounting structures 3 are respectively arranged on the two sides of the shared extension portion 2a facing the battery mounting spaces 4 on the two sides in the first direction X.

It is worth noting that "at least one extension portion 2 located in the middle among the plurality of extension portions 2 arranged along the first direction X" refers to at least one extension portion 2, excluding the two extension portions 2 on two ends, among the plurality of extension portions 2 spaced apart along the first direction X, being a shared extension portion 2a. For example, as shown in FIG. 3, when the first direction X is the length direction of the vehicle 1000 and the second direction Y is the width direction of the vehicle 1000, four extension portions 2 are provided on one side of the vehicle beam 20 in the width direction of the vehicle beam 20, and at least one of the two middle extension portions 2 is a shared extension portion 2a.

The shared extension portion 2a has the mounting structure 3 arranged on each of two sides facing the battery mounting spaces 4 on the two sides in the first direction X, allowing batteries 30 in two adjacent battery mounting spaces 4 in the first direction X to be respectively mounted to the mounting structures 3 on the two sides of the shared extension portion 2a, making the battery mounting more compact and facilitating the reduction of the arrangement difficulty of the mounting structures 3.

Thus, when the quantity of battery mounting spaces 4 spaced apart along the first direction X is fixed, the quantity of extension portions 2 spaced apart along the first direction X can be reduced. For example, in a case of the minimum quantity of battery mounting spaces 4, the quantity of extension portions 2 on one side of the vehicle beam 20 in the width of the vehicle beam 20 can be one more than the quantity of battery mounting spaces 4, meaning only one extension portion 2 is provided between two adjacent battery mounting spaces 4 along the first direction X, thereby facilitating cost reduction and reducing the load of the vehicle 1000.

However, this application is not limited thereto. For example, two extension portions 2 may be provided between two adjacent battery mounting spaces 4 along the first direction X, such that each extension portion 2 may arrange a mounting structure 3 corresponding to only one side of the battery mounting space 4, which can reduce the load-bearing force of each extension portion 2 on the battery 30 and improve the mounting reliability of the battery 30.

For example, referring again to FIG. 4, the battery installation frame 10 includes four extension portions 2 spaced apart along the first direction X, defining three battery mounting spaces 4, with the two middle extension portions 2 both being shared extension portions 2a. Certainly, the quantity of battery mounting spaces 4 described above is only for illustrative purposes. For example, battery mounting spaces 4 arranged along the first direction X of the battery installation frame 10 may be provided with two, three, five, or more, depending on the specific requirements of the vehicle 1000.

Additionally, the quantity of extension portions 2 may not be only one more than the quantity of battery mounting spaces 4; for example, three battery mounting spaces 4 may alternatively be defined by five or six extension portions 2. However, it can be understood that when the quantity of extension portions 2 is not only one more than the quantity of battery mounting spaces 4, the quantity of extension portions 2 used can be reduced, reducing the cost and weight of the battery installation frame 10.

In some embodiments, the mounting structures 3 on the two sides of the shared extension portion 2a have staggered orthographic projections on a projection plane perpendicular to the first direction X. For example, a distance from any mounting structure 3 on one side of the shared extension portion 2a to the main body portion 1 in the second direction Y is different from a distance from any mounting structure 3 on the other side of the shared extension portion 2a to the main body portion 1 in the second direction Y.

Thus, the mounting structures 3 on two sides of the shared extension portion 2a are configured to have staggered orthographic projections on the projection plane perpendicular to the first direction X, which facilitates more reasonable stress distribution on the shared extension portion 2a. When batteries 30 in the battery mounting spaces 4 on the two sides of the shared extension portion 2a are respectively connected to the mounting structures 3 on the two sides of the shared extension portion 2a, problems such as deformation or fracture of the extension portion 2 caused by stress concentration can be alleviated, the service life of the shared extension portion 2a can be prolonged, and the mounting reliability of the battery 30 can be improved.

In some embodiments, referring to FIG. 4, the extension portions 2 on the two sides of the battery mounting space 4 in the first direction X each are provided with the mounting structure 3.

Thus, the extension portions 2 on the two sides of the battery mounting space 4 in the first direction X can both support the battery 30 within the battery mounting space 4, and the mounting structures 3 on the two sides can disperse stress to alleviate problems such as deformation or fracture of the extension portion 2 caused by stress concentration, prolong the service life of the shared extension portion 2a, and improve the mounting reliability of battery 30.

In some embodiments, the mounting structures 3 on the two sides of the battery mounting space 4 have staggered orthographic projections on the projection plane perpendicular to the first direction X. For example, a distance from any mounting structure 3 on one side of the battery mounting space 4 to the main body portion 1 in the second direction Y is different from a distance from any mounting structure 3 on the other side of the battery mounting space 4 to the main body portion 1 in the second direction Y.

Thus, the mounting structures 3 on the two sides of the battery mounting space 4 are configured to have staggered orthographic projections on the projection plane perpendicular to the first direction X, which further facilitates stress dispersion of on the mounting structures 3 on the two sides, and further alleviates problems of deformation or fracture of the extension portions 2 caused by stress concentration.

Additionally, when the mounting structures 3 on the two sides of the shared extension portion 2a in the first direction X have staggered orthographic projections on the projection plane perpendicular to the first direction X, and the mounting structures 3 on the two sides of the battery mounting space 4 in the first direction X have staggered orthographic projections on the projection plane perpendicular to the first direction X, a plurality of extension portions 2 can all be constructed with the same structure, facilitating simplified structure, ease of processing, cost reduction, and improved assembly efficiency.

However, this application is not limited thereto. For example, the mounting structures 3 on the two sides of the shared extension portion 2a in the first direction X may be configured to have overlapped orthographic projections on the projection plane perpendicular to the first direction X, and the mounting structures 3 on the two sides of the battery mounting space 4 in the first direction X may also have overlapped orthographic projections on the projection plane perpendicular to the first direction X, simplifying processing and reducing costs.

In some embodiments, a plurality of the mounting structures 3 are provided on a side of the extension portion 2 facing the battery mounting space 4, at least two of which are spaced apart along a length direction of the extension portion 2 (for example, the second direction Y shown in FIG. 4).

Thus, this arrangement facilitates full utilization of the space along the length direction of the extension portion 2 to arrange a greater quantity of mounting structures 3, and thus helps to enhance the mounting stability of the battery 30 or helps to increase in the quantity of batteries 30 mounted within the battery mounting space 4.

In some embodiments, referring to FIG. 4, the extension portion 2 includes a mounting edge 24 protruding into the battery mounting space 4, and the mounting structure 3 is located on the mounting edge 24.

For example, the mounting edge 24 protrudes into the battery mounting space 4 along the first direction X.

Thus, providing the mounting edge 24 helps to reduce the difficulty of arranging the mounting structure 3, and easily achieves the mounting structure 3 being located on the side of the extension portion 2 facing the battery mounting space 4. Additionally, the mounting edge 24 can provide direct or indirect support to the battery 30 to some extent, so as to enhance the mounting stability of the battery 30.

In some embodiments, referring to FIG. 4, the mounting edge 24 is located at a lower edge of the extension portion 2 in a height direction Z of the extension portion 2.

Thus, positioning the mounting structure 3 at a lower height helps to reduce the maintenance difficulty of the mounting structure 3, also facilitates the mounting connection between the mounting structure 3 and the battery 30, and improves the compactness of coordination between the battery 30 and the extension portion 2. This reduces space waste, allowing the saved space to be used to further increase the dimension of the battery 30, thereby further improving the volumetric energy density of the battery 30.

For example, when a tool is used and extended upward to the position of the mounting structure 3 to perform the mounting connection between the mounting structure 3 and the battery 30, the raised position of the tool is lower than the extension portion 2, which can reduce the lifting height required for the tool. Moreover, the tool does not need to extend between the battery 30 and the extension portion 2, eliminating the need to increase the gap between the battery 30 and the extension portion 2 to accommodate the tool. This reduces space waste, allowing the saved space to be used to further increase the dimension of the battery 30, thereby increasing the volumetric energy density of the battery 30.

In some embodiments, referring to FIG. 4, a length direction of the mounting edge 24 is the same as an extension direction of the extension portion 2; where, referring to FIG. 5, FIG. 5 shows a partial enlarged view of a battery installation frame 10 according to an embodiment of this application, and the mounting edge 24 is provided with a plurality of mounting structures 3 spaced apart along the length direction of the mounting edge 24.

Thus, since the length direction of the mounting edge 24 is the same as the length direction of the extension portion 2, this helps to reduce the processing difficulty of the mounting edge 24, allowing the mounting edge 24 to have a larger length dimension to accommodate a greater quantity of mounting structures 3. Arrangement of a plurality of mounting structures 3 spaced apart along the length direction of the mounting edge 24 helps to enhance the mounting stability of the battery 30 or helps to increase the quantity of batteries 30 mounted on the mounting edge 24.

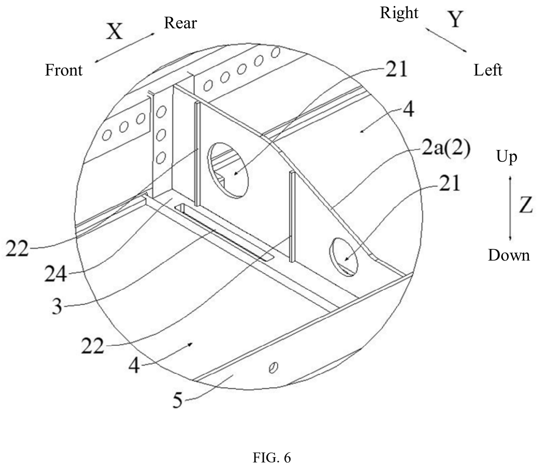

Alternatively, referring to FIG. 6, FIG. 6 shows a partial enlarged view of a battery installation frame 10 according to another embodiment of this application, where the mounting structure 3 on the mounting edge 24 is configured as one and extends along the length direction of the mounting edge 24.

In the above technical solution, since the length direction of the mounting edge 24 is the same as the extension direction of the extension portion 2, this helps to reduce the processing difficulty of the mounting edge 24, allows the mounting edge 24 to have a larger length dimension to accommodate a greater quantity of mounting structures 3. Arrangement of the plurality of mounting structures 3 spaced apart along the length direction of the mounting edge 24 helps to enhance the mounting stability of the battery 30 or helps to increase the quantity of batteries 30 mounted on the mounting edge 24.

Alternatively, only one mounting structure 3 extending along the length direction of the mounting edge 24 is provided on the mounting edge 24. Thus, providing only one mounting structure 3 on the mounting edge 24 helps to reduce the processing difficulty of the mounting structure 3. Moreover, the mounting structure 3 extends along the length direction of the mounting edge 24, in other words, a length direction of the mounting structure 3 is consistent with the length direction of the mounting edge 24. As a result, the mounting structure 3 has a larger length dimension, a larger force-bearing area, or more connection positions, which facilitates simultaneous connection with a plurality of connection structures on the battery 30, improving the mounting reliability of the battery 30, or facilitates simultaneous mounting of a plurality of batteries 30.

In some embodiments, referring to FIG. 4, the battery installation frame 10 further includes a reinforcing portion 5, the reinforcing portion 5 being configured to connect at least two of the extension portions 2 located on the same side of the main body portion 1.

It is worth noting that this embodiment is applicable to both cases where "at least one extension portion 2 is arranged on each of two sides of the main body portion 1 in the width direction of the main body portion 1" and where "an extension portion 2 is arranged on one side of the main body portion 1 in the width direction of the main body portion 1." Additionally, the at least two extension portions 2 connected by the reinforcing portion 5 may be adjacent or non-adjacent.

Furthermore, it is worth noting that the width direction of the main body portion 1 is consistent with the width direction of the vehicle beam 20, that is, the left-right direction of the vehicle 1000. For example, at least two extension portions 2 on the left side of the main body portion 1 are connected by the reinforcing portion 5, and/or at least two extension portions 2 on the right side of the main body portion 1 are connected by the reinforcing portion 5.

Thus, this arrangement helps to enhance the overall structural strength of the battery installation frame 10, alleviate deformation of the extension portions 2 caused by stress, and improve the mounting reliability of battery 30.

For example, the reinforcing portion 5 and the main body portion 1 are disposed on opposite sides of the extension portion 2 in the second direction Y. Thus, the two extension portions 2 defining the battery mounting space 4 can be connected at two ends in the second direction Y through the main body portion 1 and the reinforcing portion 5, respectively. This forms a ring-shaped structure around the battery mounting space 4, which has higher structural strength and greater reliability for mounting the battery 30, and provides more comprehensive protection to the battery 30 from all sides, while allowing flexible positioning of the mounting structure 3.

In some embodiments, referring to FIG. 4, the main body portion 1 has the extension portions 2 respectively arranged on two sides in a second direction Y.

Thus, the space on two sides of the main body portion 1 in the second direction Y can be utilized to mount batteries 30, for example, mounting two parts of the same battery 30 located on two sides of the main body portion 1 or mounting two separate batteries 30 on two sides of the main body portion 1, thereby increasing the dimension or quantity of mounted batteries 30.

Additionally, when each of two sides of the main body portion 1 in the second direction Y has the function of mounting a plurality of batteries 30 in the first direction X, the dimension of the battery installation frame 10 in the second direction Y can be fully utilized to increase the quantity of batteries 30 that the battery installation frame 10 can mount, making full use of the space of the battery installation frame 10 in the second direction Y and helping to increase the driving range of the vehicle 1000 per battery swap.

For example, when the battery installation frame 10 is installed to the vehicle body 101, the main body portion 1 can be fixed to the vehicle beam 20, allowing batteries 30 to be distributed on two sides of the vehicle beam 20, in other words, providing the battery installation frame 10 with a dual-sided mounting space configuration to fully utilize the underbody space.

In some embodiments, the extension portions 2 on the two sides of the main body portion 1 in the second direction Y have the same extension direction, and the orthographic projections of the extension portions 2 on the two sides of the main body portion 1 in the second direction Y along the extension direction overlap.

Thus, the battery mounting spaces 4 defined by the extension portions 2 on the two sides of the main body portion 1 in the second direction Y have the same dimensions and corresponding positions., such that when the battery installation frame 10 is used to install a large dimensional and relatively regular-shaped battery 30, the two side portions of the battery 30 can respectively fit with the two battery mounting spaces 4 correspondingly arranged on the two sides of the main body portion 1 in the second direction Y. This allows the two battery mounting spaces 4 correspondingly arranged on the two sides of the main body portion 1 to be used together to install a large dimensional battery 30, facilitating an increase in the energy density of the mounted battery 30. Moreover, when the extension portion 2 has a mounting structure 3, the two extension portions 2 having corresponding positions along the second direction Y can respectively support the two side portions of the large dimensional battery 30, improving the load balance and mounting stability of the battery 30.

In some embodiments, referring to FIG. 4, a height of the extension portion 2 tends to decrease in a direction away from the main body portion 1.

It is worth noting that "tends to decrease" may refer to a gradual decrease or a stepwise decrease.

Thus, configuring the height of the extension portion 2 to tend to decrease in the second direction Y in a direction away from the main body portion 1 results in a smaller height in the region of the extension portion 2 away from the main body portion 1.

In other words, the height of the end of the extension portion 2 connected to the main body portion 1 is relatively large, while the height of the end away from the main body portion 1 is relatively small, which can enhance the connection strength between the extension portion 2 and the main body portion 1, improve the reliability of the extension portion 2 in mounting the battery 30, and reduce the weight of the extension portion 2, thereby reducing the load of the vehicle 1000.

In some embodiments, referring to FIG. 4, the mounting structure 3 is located at a lower edge of the extension portion 2, the lower edge of the extension portion 2 extends along a horizontal line, and an upper edge of the extension portion 2 tends to decrease in a direction away from the main body portion 1. Herein, the two ends of the extension portion 2 in a height direction Z of the extension portion 2 are defined as the upper and lower ends, and when the height direction Z of the extension portion 2 is consistent with the height direction of the vehicle 1000, the two ends in the height direction Z are also the upper and lower ends in the gravitational direction.

Thus, by disposing the mounting structure 3 at the lower edge of the extension portion 2 in the height direction Z of the extension portion 2, with the lower edge of the extension portion 2 extending along a horizontal line, the mounting structures 3 are all at the same height and relatively low, facilitating the connection between the mounting structures 3 and the battery 30, reducing the difficulty of mounting the battery, and saving the space for swapping operations, thereby helping to increase the dimension and energy density of the battery.

For example, when the mounting structure 3 is located at the lower edge of the extension portion 2, such as on the mounting edge 24, and the mounting edge 24 is located at the lower edge of the extension portion 2, the lower edge of the extension portion 2 can be configured to extend horizontally, while the upper edge of the extension portion 2 decreases in a direction away from the main body portion 1. It is worth noting that "tend to decrease" may refer to a gradual decrease or a stepwise decrease. This ensures that the mounting structures 3 are all at the same horizontal height, facilitating mounting operations of the battery 30.

The lower edge of the extension portion 2 extending along a horizontal line ensures that the mounting structures 3 are all at the same horizontal height, facilitating mounting operations of the battery 30. Meanwhile, the upper edge of the extension portion 2 tending to decrease in a direction away from the main body portion 1 ensures that the height of the end of the extension portion 2 connected to the main body portion 1 is relatively large, while the height of the end away from the main body portion 1 is relatively small, which can enhance the connection strength between the extension portion 2 and the main body portion 1, improve the reliability of the extension portion 2 in mounting the battery 30 by, and reduce the weight of the extension portion 2, thereby reducing the load of the vehicle 1000.

In some embodiments, referring to FIG. 5 or FIG. 6, the extension portion 2 is provided with a second weight-reducing structure 21 and/or a second reinforcing structure 22.

Thus, providing the second weight-reducing structure 21 helps to reduce the weight of the extension portion 2, facilitating a lightweight design of the extension portion 2. The second weight-reducing structure 21 may include, but is not limited to, weight-reducing holes, weight-reducing slots, or thinning treatments.

Thus, providing the second reinforcing structure 22 helps to enhance the structural strength of the extension portion 2, and alleviate the problem of deformation caused by stress on the extension portion 2. The second reinforcing structure 22 may include, but is not limited to, reinforcing ribs, strip-like reinforcing protrusions, or localized thickening of the extension portion 2, and when the second reinforcing structure 22 is configured as reinforcing ribs, the structural form of the reinforcing ribs is not limited and may be, for example, linear, curved, or cross-shaped.

Additionally, when the extension portion 2 is provided with both the second weight-reducing structure 21 and the second reinforcing structure 22, the weight increase due to the second reinforcing structure 22 can be offset by the second weight-reducing structure 21, balancing the reliability and lightweight design of the extension portion 2.

According to a second aspect, referring to FIGs. 3 and 4, an embodiment of this application provides a frame assembly 100, including a vehicle beam 20 and the battery installation frame 10 according to any of the above embodiments, where the vehicle beam 20 includes two longitudinal beams 201 extending along a first direction X and spaced apart along a second direction Y, the frame body 10a is installed to the vehicle beam 20, and the docking structure 6 is located between the two longitudinal beams 201.

It is worth noting that the specific composition of the vehicle beam 20 according to the embodiments of this application is not limited. For example, as shown in FIG. 3, the vehicle beam 20 may include two longitudinal beams 201 extending along the length direction of the vehicle and at least one cross beam 202 extending along the width direction of the vehicle, with the two longitudinal beams 201 spaced apart along the width direction of the vehicle, and the cross beam 202 connecting the two longitudinal beams 201. Since the vehicle beam 20 includes two longitudinal beams 201 extending along the first direction X and spaced apart along the second direction Y, the second direction Y may be set to be orthogonal to the first direction X.

Thus, with the docking structure 6 disposed between the two longitudinal beams 201, the two longitudinal beams 201 can provide a certain degree of protection to the docking structure 6, reducing damage to the docking structure 6 and prolonging the service life of the docking structure 6. Additionally, the docking structure 6 can fully utilize the space between the two longitudinal beams 201 to improve space utilization and reduce the volume of the battery installation frame 10, thereby increasing the capacity of the battery 30. Moreover, the portion of the docking structure 6 located between the two longitudinal beams 201 can be protected by the two longitudinal beams 201, reducing the probability of the docking structure 6 being damaged by collisions, alleviating the problem of corrosion failure of the docking structure 6 caused by mud or water, improving the reliability and stability of docking, and reducing the risk of electrical faults in the docking structure 6 due to mud or water splash erosion. Furthermore, the docking structure 6 does not need to occupy space outside the vehicle beam 20, avoiding interference with the coordination between the battery installation frame 10 and the vehicle beam 20 or the battery 30.

In some embodiments, a docking interface of the docking structure 6 is higher than a bottom surface of the longitudinal beams 201 and is disposed downward.

Thus, since the docking interface of the docking structure 6 is higher than the bottom surface of the longitudinal beams 201, the docking interface of the docking structure 6 has a greater ground clearance, providing better protection. Moreover, the height setting of the docking interface of the docking structure 6 helps to save the space to increase the height dimension of the battery 30, allowing at least a portion of the battery 30 to extend between the two longitudinal beams 201, improving the compactness of coordination between the battery installation frame 10 and the battery 30, fully utilizing space, and increasing the dimension and volumetric energy density of the battery 30. Additionally, configuring the docking interface to face downward enables the battery 30 to achieve docking with the docking structure 6 while the battery 30 is mounted from bottom to top, thereby improving swapping efficiency.

This allows the docking direction of the battery 30 with the vehicle 1000 to be arranged along the height direction of the vehicle 1000, and since the swapping movement direction of the battery 30 when mounted to the vehicle 1000 is also along the height direction of the vehicle 1000, the docking direction of the battery 30 can overlap with the swapping movement direction, eliminating the need for additional docking space in the length or width direction of the vehicle 1000, improving space utilization, and allowing the mounting and docking of the battery 30 to be performed in the same direction, thereby improving swapping efficiency.

According to a third aspect, an embodiment of this application provides a vehicle 1000 including a battery 30 and the frame assembly 100 according to any of the above embodiments, where the battery 30 is mounted on the mounting structure 3 and docked with the docking structure 6. It is worth noting that the entirety of the vehicle 1000, excluding the battery 30 and the battery installation frame 10, can be understood as the vehicle body 101, with the vehicle beam 20 being a part of the vehicle body 101.

Thus, by providing the frame assembly 100, the mounting structure 3 is used to mount the battery 30, and the docking structure 6 enables the battery 30 to form electrical and/or fluidic communication with the vehicle body 101 to meet the electrical and/or fluidic communication requirements between the battery 30 and the vehicle body 101, simplifying the structural design at the docking point of the vehicle body 101 and the battery 30. By integrating both the mounting structure 3 and the docking structure 6 on the frame body 10a, their positional reference datum is consistent, improving the swapping efficiency and battery swapping success rate of the battery 30.

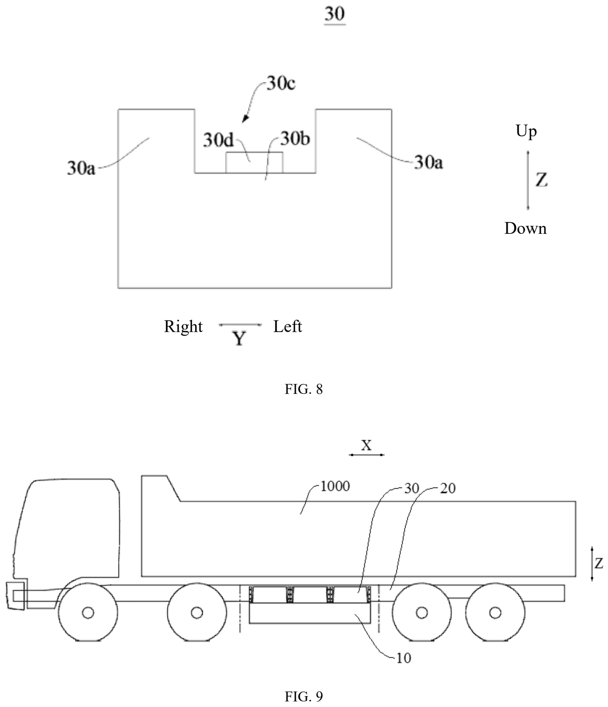

In some embodiments, referring to FIG. 8, FIG. 8 shows a schematic structural diagram of a battery 30 according to some embodiments of this application.

The battery 30 includes two battery side portions 30a and a battery central portion 30b, where in a width direction of the vehicle beam 20, the two battery side portions 30a are respectively located on two sides of the battery central portion 30b, a top surface of the battery central portion 30b is lower than a top surface of the battery side portions 30a, to form an avoidance groove 30c, between the two battery side portions 30a and the battery central portion 30b, that extends along a length direction of the vehicle beam 20 and has an open top for avoiding the vehicle beam 20, the battery side portions 30a are detachably connected to the mounting structure 3, and the top of the battery central portion 30b has a docking portion 30d for docking with the docking structure 6.

Thus, by configuring the top surface of the battery central portion 30b to be lower than the top surface of the battery side portions 30a, an avoidance groove 30c is formed between the two battery side portions 30a and the battery central portion 30b. During actual installation of the battery 30, the avoidance groove 30c can be used to avoid the vehicle beam 20, preventing interference between the battery 30 and the vehicle beam 20, fully utilizing the space on two sides of the vehicle beam 20 in the width direction of the vehicle beam 20, allowing the overall dimension of the battery 30 to be increased, thereby improving the volumetric energy density of the battery 30.

The battery side portions 30a are detachably connected to the mounting structure 3, and the top of the battery central portion 30b has a docking portion 30d, allowing the docking structure 6 and the mounting structure 3 to be distributed separately, avoiding concentrated connection points, facilitating reduced assembly difficulty, and meeting mounting and docking requirements. Additionally, when both battery side portions 30a are connected to the mounting structure 3, the mounting reliability and stability of the battery 30 can be enhanced.

It is worth noting that the docking portion 30d is disposed at the top of the battery central portion 30b, allowing the battery 30's docking portion 30d to easily dock with the docking structure 6 located between the two longitudinal beams 201 when the battery 30 moves from bottom to top along the height direction of the vehicle 1000, facilitating reduced swapping operation difficulty, improving swapping efficiency, and saving space required for swapping operations.

For example, as shown in FIG. 3, when extension portions 2 are provided on two sides of the vehicle beam 20 in the width direction (for example, the second direction Y shown in FIG. 3) and the battery 30 is mounted to the vehicle beam 20, at least a portion of the vehicle beam 20 is located within the avoidance groove 30c and above the battery central portion 30b, and the two battery side portions 30a can be respectively mounted in the battery mounting spaces 4 on two sides of the vehicle beam 20 in the width of the vehicle beam 20, fully utilizing the space in the width direction of the vehicle beam 20 to accommodate a larger-sized battery 30.

Furthermore, when the docking interface of the docking structure 6 is disposed downward, the battery 30 can simultaneously achieve docking with the docking structure 6 while the battery 30 is mounted to the mounting structure 3 from bottom to top. In this way, the docking space of the battery 30 to dock with the vehicle 1000 is arranged along the height direction of the vehicle 1000, and since the swapping movement space of the battery 30 when mounted to the vehicle 1000 is also along the height direction of the vehicle 1000, the docking direction of the battery 30 can overlap with the swapping movement direction, eliminating the need for additional docking space in the length or width direction of the vehicle 1000, improving space utilization, and allowing the battery 30 swapping and battery 30 docking to be performed synchronously, thereby improving swapping efficiency.

The connection method between the battery side portion 30a and the mounting structure 3 includes, but is not limited to, bolting, snapping, plugging, or magnetic attachment. Additionally, the battery side portion 30a may be connected to the mounting structure 3 at its upper, middle, or lower part. For example, the upper end of the battery side portion 30a may be set higher than the bottom surface of the vehicle beam 20, while the lower end of the battery side portion 30a may be set lower than the bottom surface of the vehicle beam 20, fully utilizing the space on two sides of the vehicle beam 20's width.

In recent years, in application scenarios such as logistics, docks, and mines, battery swapping has become an important method for replenishing energy for pure electric commercial vehicles, and the construction of battery swapping stations has been accelerating. To ensure universal interchangeability in battery swapping, the battery swapping facilities such as swapping stations and charging equipment can be fully utilized to reduce resource waste.

This application proposes some embodiments related to battery swapping under frame to improve compatibility and interchangeability. However, the following embodiments are not limited to battery electric vehicles, and other types of swapping vehicles may also reference these embodiments.

In some embodiments, the operating voltage range of the swappable battery system is 400 V to 750 V.

In some embodiments, the flatness of the contact surface of the swappable battery system is ≤4 mm. Specifically, the contact interface between the swappable battery system and the battery installation frame should be a plane without protruding structures, with a flatness of less than 4 mm.

In some embodiments, the dimensional tolerance of the swappable battery system is within ±10 mm.

In some embodiments, in the swappable battery system, the vehicle weight M1 and the battery capacity Q satisfy: 0 kg < M1 ≤ 1400 kg, 100 kWh ≤ Q ≤ 200 kWh; or 1400 kg < M1 ≤ 2800 kg, 200 kWh < Q ≤ 400 kWh; or 2800 kg < M1 ≤ 4200 kg, 400 kWh < Q ≤ 600 kWh; or 4200 kg < M1 ≤ 5600 kg, 600 kWh < Q ≤ 800 kWh.

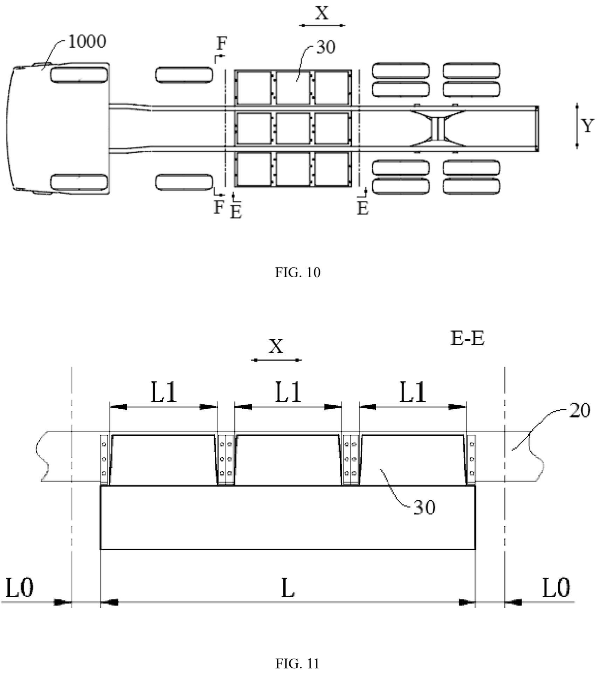

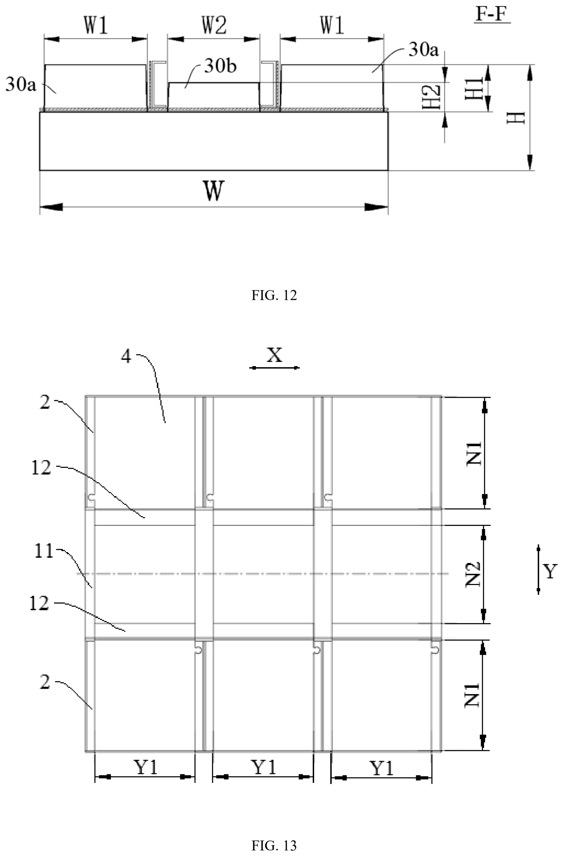

In some embodiments, as shown in FIGs. 9 and 10, the swappable battery system should be replaced on a vehicle within the corresponding envelope space, with the battery dimensions in the swappable battery system as indicated in FIGs. 11 and 12.

In some embodiments, referring to FIGs. 9 to 12, the front and rear end faces of the swappable battery system maintain a safety clearance L0 with the vehicle, where L0 ≥ 50 mm.

In some embodiments, referring to FIGs. 9 to 12, the dimension L of the swappable battery system along the length direction of the vehicle satisfies: 700 mm ≤ L ≤ 900 mm; or 1500 mm ≤ L ≤ 1700 mm; or 2300 mm ≤ L ≤ 2500 mm; or 3100 mm ≤ L ≤ 3300 mm.

In some embodiments, referring to FIGs. 9 to 12, the dimension W of the swappable battery system along the width direction of the vehicle satisfies: 2300 mm ≤ W ≤ 2550 mm.

In some embodiments, referring to FIGs. 9 to 12, the total height H of the swappable battery system satisfies: H ≤ 680 mm.

In some embodiments, referring to FIGs. 9 to 12, the length dimension L1 of the upper platform (for example, the battery upper portion) of the swappable battery system satisfies: 600 mm ≤ L1 ≤ 700 mm.

In some embodiments, referring to FIGs. 9 to 12, the width dimension W1 of the upper side platforms (for example, the upper part of the battery side portion 30a) of the swappable battery system satisfies: W1 ≤ 805 mm.

In some embodiments, referring to FIGs. 9 to 12, the width dimension W2 of the upper middle platform (for example, the upper part of the battery central portion 30a) of the swappable battery system satisfies: W2 ≤ 640 mm.

In some embodiments, referring to FIGs. 9 to 12, the height dimension H1 of the upper side platforms (for example, the upper part of the battery side portion 30a) of the swappable battery system satisfies: H1 ≤ 300 mm.

In some embodiments, referring to FIGs. 9 to 12, the height dimension H2 of the upper middle platform (for example, the upper part of the battery central portion 30a) of the swappable battery system satisfies: H2 ≤ 150 mm.

The application scenarios for heavy-duty electric trucks currently include long-haul logistics, short- to medium-distance operations (for example, urban waste transport), and enclosed operation scenarios (for example, ports). The corresponding energy demands can be roughly divided into three categories: 400 kWh-600 kWh, 300 kWh-400 kWh, and 150 kWh-200 kWh. Based on this energy series, it can be seen that adopting a standard pack solution allows flexible configuration for different scenarios. For example, a standard swappable battery system with a capacity of approximately 150 kWh-200 kWh can use three standard swappable battery systems (referred to as triple-pack), two standard swappable battery systems (referred to as dual-pack), or a single standard swappable battery system (referred to as single-pack) to meet energy demands.

The main models of heavy-duty electric trucks currently include: 6*4 tractors, 4*2 tractors, 8*4 dump trucks, 6*4 dump trucks, 4*2 cargo trucks, and 6*4 cargo trucks, among which the 6*4 tractors and 8*4 dump trucks have relatively short wheelbases, while other models are compatible. For the 6*4 tractors, the traditional fuel vehicle wheelbase is 3300 mm, which is an ideal wheelbase but currently cannot accommodate large energy capacities. For rear-mounted swapping models, the wheelbase has been extended to 3800 mm, but this space still cannot accommodate the target energy capacity. Currently, efforts are being made to extend the wheelbase to 4200 mm, based on which the battery space is allocated. For the 8*4 dump truck, there are versions for urban use and mining areas. Mining 8*4 dump trucks have a longer wheelbase to ensure transport capacity. With the wheelbase being increased, this space can accommodate the target energy capacity. Urban 8*4 dump trucks with traditional fuel vehicle wheelbases of 2500 mm-2600 mm cannot accommodate the target energy capacity, and for rear-mounted swapping models, the wheelbase has been extended to 3200 mm-3300 mm, with battery swapping under frame based on this extended wheelbase for battery space allocation.

The space constraints at the front end of the battery include the leaf spring and its bracket, with the industry typically at 1600 mm-1800 mm (900 mm per side) under heavy load conditions. The space constraints at the rear end of the battery include the mudguard, approximately 700 mm from the wheel center. With a 50 mm safety clearance at both the front and rear ends of the battery, the envelope dimension for the swappable battery system for a 6*4 tractor is approximately 4200-900-700-100=2500 mm (triple-pack), and for an 8*4 dump truck, it is approximately 3300-900-700-100=1600 mm (dual-pack). Based on the envelope space of these two swappable battery systems, considering a 20 mm-30 mm gap between swappable battery systems, the length envelope dimension for each swappable battery system is approximately 700 mm-820 mm.

The width envelope dimension of the swappable battery system is designed to not exceed the legally required vehicle width, for example, 2550 mm for heavy-duty electric trucks.

The height envelope dimension of the swappable battery system is designed with a 20 mm gap between the upper end of the swappable battery system and the upper flange of the vehicle beam, and the bottom surface of the swappable battery system maintains a ground clearance of 300 mm or 400 mm or more. The upper flange of the vehicle beam typically has a ground clearance of 1000 mm-1100 mm, so the height envelope dimension for the swappable battery system is approximately 580 mm-780 mm.

Furthermore, to improve compatibility and interchangeability in battery swapping, this application further proposes some embodiments related to the battery installation frame 10.

In some embodiments, referring to FIG. 13, in the length direction of the vehicle (for example, first direction X), the length of the battery mounting space 4 is Y1 and satisfies: 620 mm ≤ Y1 ≤ 720 mm.

In some embodiments, referring to FIG. 13, in the width direction of the vehicle (for example, second direction Y), the width of the battery mounting space 4 is N1 and satisfies: 690 mm ≤ N1 ≤ 815 mm.

In some embodiments, referring to FIG. 13, in the width direction of the vehicle (for example, second direction Y), the minimum width between the two second main walls 12 (or the width of the avoidance opening 15) is N2 and satisfies: 660 mm ≤ N2 ≤ 680 mm.

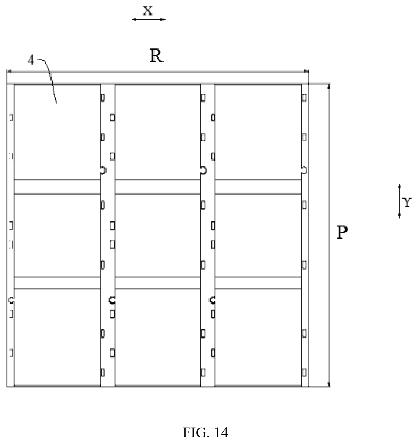

In some embodiments, referring to FIG. 14, in the width direction of the vehicle (for example, second direction Y), the total width of the battery installation frame 10 is P, and in the length direction of the vehicle (for example, first direction X), the total length of the battery installation frame 10 is R, and satisfies: 2300 mm ≤ P ≤ 2550 mm, 700 mm ≤ R ≤ 900 mm (for example, having only one battery mounting space 4), or 1500 mm ≤ R ≤ 1700 mm (for example, having two battery mounting spaces 4), or 2300 mm ≤ R ≤ 2500 mm (for example, having three battery mounting spaces 4), or 3100 mm ≤ R ≤ 3300 mm (for example, having four battery mounting spaces 4).

The above embodiments are only used to illustrate the technical solutions of this application and are not intended to limit them. Although this application has been described in detail with reference to the foregoing embodiments, those skilled in the art should understand that modifications can still be made to the technical solutions described in the foregoing embodiments, or equivalent replacements can be made to some or all of the technical features. Such modifications or replacements do not cause the essence of the corresponding technical solutions to depart from the scope of the technical solutions of the embodiments of this application, and they should be included within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery installation frame, comprising:
a frame body, wherein the frame body is configured to be installed to a vehicle body;
a mounting structure, wherein the mounting structure is integrated on the frame body and configured to mount a battery; and
a docking structure, wherein the docking structure is also integrated on the frame body and configured to connect the vehicle body and dock with the battery, so as to enable the battery to form electrical and/or fluidic communication with the vehicle body.

2. The battery installation frame according to claim 1, wherein the frame body comprises:
a main body portion, wherein the main body portion is configured to be installed to the vehicle body, and the docking structure is disposed on the main body portion; and
an extension portion, wherein one end of the extension portion is connected to the main body portion, another end extends in a direction away from the main body portion, and the mounting structure is disposed on the extension portion.

3. The battery installation frame according to claim 2, wherein the main body portion comprises a beam avoidance groove, the beam avoidance groove has an opening running through along a first direction, and the docking structure is located within the beam avoidance groove.

4. The battery installation frame according to claim 3, wherein the main body portion comprises a plurality of first main walls spaced apart along the first direction, an avoidance opening is formed between two adjacent first main walls, and a docking interface of the docking structure is higher than the first main walls and is disposed corresponding to the avoidance opening.

5. The battery installation frame according to claim **4,** wherein the docking structure comprises a bearing frame and a docking apparatus, the bearing frame comprises a bearing portion and leg portions, wherein the docking apparatus is disposed on the bearing portion, and the leg portions extend from two ends of the bearing portion in the first direction toward the first main wall and are connected to the first main wall.

6. The battery installation frame according to claim 5, wherein the bearing portion has a first weight-reducing structure, and/or a first reinforcing structure is provided at a connection between the leg portion and the bearing portion.

7. The battery installation frame according to claim 5 or 6, wherein the bearing frame is an integrally formed piece and is assembled and connected to the first main wall.

8. The battery installation frame according to any one of claims 4 to 7, wherein the avoidance opening is provided in plurality, the plurality of avoidance openings are spaced apart along the first direction, and each of the avoidance openings is provided with the corresponding docking structure.

9. The battery installation frame according to any one of claims 4 to 8, wherein the main body portion comprises two second main walls extending along the first direction, the two second main walls being spaced apart along a second direction intersecting the first direction, and the two second main walls being connected to two ends of each of the first main walls in the second direction to form the beam avoidance groove with an open top between the first main walls and the second main walls; and the extension portion is connected to the second main wall and located on a side of the second main wall away from the first main wall in the second direction.

10. The battery installation frame according to any one of claims 2 to 9, wherein a plurality of the extension portions spaced apart along the first direction are provided on one side of the main body portion, and a battery mounting space is defined between two adjacent extension portions.

11. The battery installation frame according to claim 10, wherein a plurality of battery mounting spaces spaced apart along the first direction are provided on one side of the main body portion, the docking structure is provided in plurality, the plurality of docking structures are spaced apart along the first direction, and the plurality of docking structures are arranged opposite the plurality of battery mounting spaces along a second direction intersecting the first direction.

12. The battery installation frame according to claim 10 or **11,** wherein the mounting structure is arranged on a side of the extension portion facing the battery mounting space.

13. The battery installation frame according to claim 12, wherein at least one extension portion located in the middle among the plurality of extension portions arranged along the first direction is a shared extension portion, the shared extension portion has the battery mounting space on each of two sides in a length direction of the main body portion, and the mounting structures are respectively arranged on the two sides of the shared extension portion facing the battery mounting spaces on the two sides in the length direction of the main body portion.

14. The battery installation frame according to claim 13, wherein the mounting structures on the two sides of the shared extension portion have staggered orthographic projections on a projection plane perpendicular to the first direction.

15. The battery installation frame according to any one of claims 12 to 14, wherein the extension portions on the two sides of the battery mounting space in the first direction each are provided with the mounting structure.

16. The battery installation frame according to claim 15, wherein the mounting structures on the two sides of the battery mounting space have staggered orthographic projections on the projection plane perpendicular to the first direction.

17. The battery installation frame according to any one of claims 12 to 16, wherein a plurality of the mounting structures are provided on a side of the extension portion facing the battery mounting space, at least two of which are spaced apart along a length direction of the extension portion.

18. The battery installation frame according to any one of claims 12 to 17, wherein the extension portion comprises a mounting edge protruding into the battery mounting space, and the mounting structure is located on the mounting edge.

19. The battery installation frame according to claim 18, wherein the mounting edge is located at a lower edge of the extension portion in a height direction of the extension portion.

20. The battery installation frame according to claim 18 or 19, wherein a length direction of the mounting edge is the same as an extension direction of the extension portion; wherein the mounting edge is provided with a plurality of mounting structures spaced apart along the length direction of the mounting edge, or the mounting structure on the mounting edge is configured as one and extends along the length direction of the mounting edge.

21. The battery installation frame according to any one of claims 11 to 20, wherein the battery installation frame further comprises a reinforcing portion, the reinforcing portion being configured to connect at least two of the extension portions located on the same side of the main body portion.

22. The battery installation frame according to any one of claims 10 to 21, wherein the main body portion has the extension portions respectively arranged on two sides in a second direction intersecting the first direction.

23. The battery installation frame according to claim 22, wherein the extension portions on two sides of the main body portion in the second direction have the same extension direction, and the orthographic projections of the extension portions on the two sides of the main body portion in the second direction along the extension direction overlap.

24. The battery installation frame according to any one of claims 2 to 23, wherein a height of the extension portion tends to decrease in a direction away from the main body portion.

25. The battery installation frame according to claim 24, wherein the mounting structure is located at a lower edge of the extension portion, the lower edge of the extension portion extends along a horizontal line, and an upper edge of the extension portion tends to decrease in a direction away from the main body portion.

26. The battery installation frame according to any one of claims 2 to 25, wherein the extension portion is provided with a second weight-reducing structure and/or a second reinforcing structure.

27. A frame assembly, comprising:
a vehicle beam, wherein the vehicle beam comprises two longitudinal beams extending along a first direction and spaced apart along a second direction; and
the battery installation frame according to any one of claims 1 to 26, wherein the frame body is installed to the vehicle beam, and the docking structure is located between the two longitudinal beams.

28. The frame assembly according to claim 27, wherein a docking interface of the docking structure is higher than a bottom surface of the longitudinal beams and is disposed downward.

29. A vehicle, comprising a battery and the frame assembly according to claim 27 or 28, wherein the battery is mounted on the mounting structure and docked with the docking structure.

30. The vehicle according to claim 29, wherein the battery comprises two battery side portions and a battery central portion, wherein in a width direction of the vehicle beam, the two battery side portions are respectively located on two sides of the battery central portion, a top surface of the battery central portion is lower than a top surface of the battery side portions, to form an avoidance groove, between the two battery side portions and the battery central portion, that extends along a length direction of the vehicle beam and has an open top for avoiding the vehicle beam, the battery side portions are detachably connected to the mounting structure, and the top of the battery central portion has a docking portion for docking with the docking structure.
